(19) Europäisches Patentamt / European Patent Office / Office européen des brevets

(11) **EP 4 413 421 B1**

(12) **FASCICULE DE BREVET EUROPEEN**

(45) Date de publication et mention
de la délivrance du brevet:
**18.02.2026 Bulletin 2026/08**

(21) Numéro de dépôt: **22817296.1**

(22) Date de dépôt: **05.10.2022**

(51) Classification Internationale des Brevets (IPC):
*G02F 1/137* (2006.01)      *G02F 1/1343* (2006.01)
*G02F 1/1347* (2006.01)      *G02F 1/01* (2006.01)

(52) Classification Coopérative des Brevets (CPC):
**G02F 1/134363; G02F 1/0136; G02F 1/13725;**
G02F 1/13475; G02F 2201/124

(86) Numéro de dépôt international:
**PCT/FR2022/051882**

(87) Numéro de publication internationale:
**WO 2023/057721 (13.04.2023 Gazette 2023/15)**

(54) **SYSTEME OPTIQUE A CRISTAUX LIQUIDES**

OPTISCHES FLÜSSIGKRISTALLSYSTEM

LIQUID-CRYSTAL OPTICAL SYSTEM

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **06.10.2021 FR 2110591**

(43) Date de publication de la demande:
**14.08.2024 Bulletin 2024/33**

(73) Titulaires:
• **Saint-Gobain Glass France
92400 Courbevoie (FR)**

• **Centre National de la Recherche Scientifique
75794 Paris Cedex 16 (FR)**

(72) Inventeur: **MONDIOT, Frédéric
93303 AUBERVILLIERS (FR)**

(74) Mandataire: **Saint-Gobain Recherche
41 Quai Lucien Lefranc
93300 Aubervilliers (FR)**

(56) Documents cités:
**WO-A1-2015/177356      WO-A1-2021/115246
US-A1- 2012 140 133**

**EP 4 413 421 B1**

**Description**

L'invention concerne un système optique à cristaux liquides comportant un dispositif électrocommandable par cristaux liquides.

Il existe des systèmes à cristaux liquides sous forme de première et deuxième cellules de cristaux liquides électroactives en face à face permettant soit de laisser passer la lumière soit de l'occulter. US 2012/140133 A1 constitue un document de l'art antérieur utile pour comprendre l'invention.

Un objet de l'invention consiste à développer un système à cristaux liquides avec des propriétés électro-optiques alternatif ou même offrant de nouvelles fonctionnalités.

A cet effet, la présente invention propose un système optique à cristaux liquides comportant un dispositif électrocommutable à polarisation variable (en transmission), dit polariseur variable, comportant :

- des première et deuxième électrodes transparentes, avec un champ électrique E2 entre les première et deuxième électrodes, notamment sous forme de couche électroconductrices sur élément porteur commun (configuration coplanaire), les première et deuxième électrodes (de préférence en couche) étant coplanaires (sur un élément porteur commun de préférence plutôt qu'autoportantes), formant une alternance de premières et deuxièmes bandes électroconductrices (métalliques par exemple) à des potentiels distincts, notamment bandes allongées (linéaires, de préférence rectilignes) selon une direction r0
- une couche électroactive étant d'épaisseur submillimétrique et même d'au plus $100\mu m$ et d'au moins $50nm$, notamment de $50nm$ à $50\mu m$ et même de $100nm$ à $20\mu m$ et mieux d'au moins $1\mu m$ ou $5\mu m$, couche électroactive en une matière -thermotrope contenant (voire constituée de) :

  - des cristaux liquides (thermotropes de préférence qui sont nématiques, courbés ou non, de préférence torsadés (sous l'action de couches d'ancrage) à l'état off hors tension électrique et/ou cholestériques- ( de préférence majoritaires en poids dans la matière (de préférence au moins 50%, 70%, 80%, 85% 95% en poids desdits cristaux liquides), notamment cristaux liquides comportant des mésogènes, par exemple sans chaine de polymère ou qui sont des groupements incorporés dans une chaine principale ou latérale d'un polymère (famille dite 'LCP' en anglais), en particulier cristaux liquides de taille d'au plus $50nm$, $20nm$ ou $10nm$ (et inférieure à $Ep_2$), en particulier un mélange de plusieurs cristaux liquides (purs, au sens non LCP), donc plusieurs mésogènes -des colorants dichroïques,(en particulier à l'état dissous, notamment dans les cristaux liquides), par exemple au plus 30%, 20%, 10%, 5% en poids de colorant dichroïques (un ou plusieurs colorants dichroïques), colorant dichroïque notamment de taille d'au plus $50nm$, $20nm$ ou $10nm$ (et inférieure à $Ep_2$) en particulier cristaux liquides et colorants dichroïque sont de tailles comparables par exemple chacun de moins de 20 ou $10nm$,
  - éventuellement des polymères (non réticulés de préférence) ou précurseur de polymère de préférence avec au plus 20%, 15%, 10%, 5% ou 1% en poids de polymère (ou polymères et précurseurs de polymères), par exemple la couche électroactive n'étant pas du type (PDLC ou PSLC)
  - de préférence des espaceurs notamment de hauteur (et même de plus grande dimension) inférieure ou égale à Ep2, en périphérie (diélectrique, transparents ou non éventuellement masqués par un cadre, par exemple en mylar etc) et/ou dispersés dans la couche électroactive (diélectriques, transparents, notamment plastique, verre, silice, de préférence subcentimétriques, notamment des billes)
  - éventuellement des autres additifs (autres que les colorants dichroïques), par exemple des particules colorantes telles que des nanoparticules métalliques (or, argent, alliage des deux etc) ou d'oxyde métallique (oxyde de tungstène, d'étain etc) ou même tout autre colorant non-dichroïque ou toute autre molécule absorbant la lumière, de préférence de hauteur inférieure ou égale à Ep2 (et même de plus grande dimension inférieure ou égale à Ep2).

De préférence, la couche électroactive électrocommutable est scellée en périphérie par un joint diélectrique notamment polymérique (en bordure des surfaces principales), en contact avec la matière (ou séparé par un espaceur périphérique).

Ainsi conçu, le polariseur variable dans un premier état fonctionnel qui est l'état off, est apte à délivrer une lumière polarisée avec une polarisation P1 (dominante) et dans un deuxième état fonctionnel qui est l'état on est apte à délivrer une lumière polarisée une deuxième polarisation P2 distincte de P1 (de préférence dominante).

L'invention s'applique dans divers domaines notamment dans le bâtiment (fenêtre, cloison, sol vitré), en extérieur notamment dans l'espace urbain, ou dans un véhicule routier, ferroviaire maritime, ou aéronautique (pare-brise, latérale, toit vitré, etc). Intégré à un vitrage de bâtiment ou de véhicule l'autre dispositif peut être indifféremment orienté vers l'extérieur ou vers l'intérieur

Le polariseur variable en lui- même n'a pas besoin de polariseur(s) par exemple polariseur et analyseur croisés pour fonctionner. En particulier, le polariseur variable peut être dénué de films polariseurs statiques.

Le temps de commutation du polariseur variable peut être inférieur à quelques secondes. Les états de commutations du système optique sont réversibles et (quasi) immédiats.

Le polariseur variable n'a besoin que d'une couche de cristaux liquides (système monocellule) et non plusieurs couches de cristaux liquides pour former un polariseur variable.

Les propriétés optiques du système optique peuvent être ajustables :

- en éteignant ou appliquant le champ électrique E2 (de préférence alternatif) et en choisissant le niveau de tension U2
- en choisissant l'orientation de la polarisation (dominante) de sortie dite P1 par rapport à une direction caractéristique b d'un autre dispositif sensible à la polarisation comme détaillée plus tard, en particulier P1 sensiblement parallèle ou sensiblement perpendiculaire à b.

Concernant le polariseur variable, les colorants dichroïques, asservis aux cristaux liquides, de préférence torsadés à l'état off, jouent un rôle clé pour apporter la fonction de polarisation variable. Le polariseur variable à polarisation variable est transparent de préférence présente un flou d'au plus 10% ou 1% ou 0,5% à l'état éteint (off) comme allumé (on).

U2 peut être inférieure à 120V ou même 80V.

On peut prévoir d'appliquer U2 (et même de choisir le niveau de U2) en fonction d'une consigne. Ainsi on peut prévoir des moyens de commande du polariseur variable.

Le système optique peut être d'épaisseur d'au plus 1cm ou 5 mm ou 1mm.

Le polariseur variable peut être d'épaisseur d'au plus 5 mm ou 1mm ou 0,5mm.

Les première et deuxième électrodes (de préférence en couche) sont coplanaires donnant une commutation planaire (in plane switching » en anglais).

Les paramètres influençant les propriétés optiques sont notamment :

- le choix des cristaux liquides notamment du mélange de mésogènes (en particulier pour la gamme de température de travail et la réduction du niveau de tension à l'état on) et leur anisotropie diélectrique
- le niveau de transparence des électrodes avec une absorption la plus faible possible (de leur support éventuel) et dans le cas d'électrodes en bandes la densité des bandes (pour abaisser la tension électrique en réduisant l'espace entre bandes et pour réduire les zones sans commutation des cristaux liquides pour augmenter le contraste off /on)
- le choix des colorants dichroïques (le ratio dichroïque leur concentration, etc) en particulier pour avoir un spectre d'absorption le plus élevé et constant dans le visible
- l'épaisseur de couche électroactive.

La caractérisation optique du système optique selon l'invention se fait se fait d'un côté ou de l'autre.

Toutefois la lumière en sortie du côté avec les électrodes en bandes (suivant ro) est polarisée plutôt suivant P1 (normal à ro et avec de préférence une couche d'ancrage unidirectionnelle suivant r1 parallèle à r0 sur les électrodes en bandes) et plutôt suivant P2 en sortie du côté sans les électrodes en bandes. Ce peut être un film plastique (étiré) à colorants dichroïques.

La première (respectivement la deuxième) électrode peut comporter (voire être constituée de) une couche électroconductrice (monocouche ou multicouche, en particulier dépôt(s)) notamment minérale en particulier d'épaisseur d'au plus 200nm (sur élément porteur de préférence couche électroconductrice entre élément porteur et couche d'ancrage), notamment comportant un moyen d'amenée de courant (bande -bus bar- notamment métallique, en cuivre, à l'argent etc) en bordure.

De préférence la densité de bandes électroconductrices est la plus grande possible (bandes de largeur la plus faible possible et avec un espace interbandes la plus faible possible).

Ainsi on applique une différence de potentiel entre 2 « bornes » situées dans un même plan et isolées électriquement 2 à 2.

E2 est majoritairement planaire (parallèle aux première et deuxième électrodes).

On cherche tout en préservant la conductivité électrique, à ce que les bandes soient les plus fines possibles pour améliorer le pouvoir "polariseur" dans le mode ON. On chercher également à diminuer le plus possible la largeur interbandes (autrement dit bandes isolantes dépourvues de conducteur électrique) pour diminuer la différence de potentiel à appliquer.

Par exemple les bandes électroconductrices et/ou la largeur interbandes (bandes isolantes) sont d'au plus $50\mu m$ ou $30\mu m$ ou $10\mu m$.

Par exemple les bandes isolantes forment un arrangement en serpentin et on isole une première zone de couche électroconductrice avec une deuxième zone de la couche par une première portion de la première bande isolante du serpentin et par une dernière portion de la dernière bande isolante du serpentin.

On peut prévoir de réaliser cet arrangement de bandes isolantes par retrait d'une couche pleine électroconductrice notamment par faisceau laser. La limite en épaisseur de bande est donnée par la taille du faisceau laser. La limite de la distance inter-bande est dictée par le déplacement du faisceau laser.

Avantageusement, le champ électrique E2 est alternatif et de préférence la tension appliquée U2 entre les premier et deuxième électrodes est d'au plus 120V.

E2 est de préférence alternatif avec une fréquence à partir de 50Hz, par exemple une fréquence de 100Hz, 1kHz ou 2kHz. Par tension on entend la tension pic (Vpeak en anglais).

Le choix de U2 peut être piloté, notamment ajusté en fonction de données récoltées par des capteurs (température, luminosité etc) en communication avec le dispositif (commandant la source d'alimentation électrique).

De préférence le polariseur variable, dans un état fonctionnel qui est l'état off (éteint), est apte à délivrer en sortie (notamment côté première et deuxième électrodes) une lumière avec une polarisation P1 (dominante) et une deuxième polarisation P2 (de préférence dominante) à l'état on (deuxième état fonctionnel détaillé plus tard) qui est normale à P1.

Plus largement, le polariseur variable peut présenter des premier et deuxième états fonctionnels tels que :

- dans le premier état fonctionnel qui est l'état off (l'état éteint, hors tension électrique), à partir d'une lumière incidente (notamment côté opposé aux première et deuxième électrodes) le polariseur variable est apte à délivrer une lumière de sortie (polarisée) (notamment côté première et deuxième électrodes) avec une première composante du champ électrique (polarisée) P1 suivant un premier axe et une deuxième composante du champ électrique (polarisée) P2 suivant un deuxième axe normal au premier axe, avec un premier ratio de polarisation défini par :

[Math 1]

$$rp1 = \frac{T1}{T1+T2}$$

rp1 étant d'au moins 70% et mieux d'au moins 90%, et même d'au moins 95% T1 étant la transmission totale à une longueur d'onde entre 380 et 800nm suivant le premier axe voire même la transmission totale moyennée au moins entre 400 et 600nm et même de 380 à 640nm et T2 étant la transmission totale suivant le deuxième axe à la longueur d'onde entre 380 et 800nm, voire même la transmission totale moyennée au moins entre 400 et 600nm et même de 380 à 640nm (pour une première tension nulle entre les première et deuxième électrodes)

- et dans le deuxième état fonctionnel qui est un état on (état allumé, de mise sous tension électrique).:
à partir d'une lumière incidente non polarisée (notamment côté opposé aux première et deuxième électrodes) , le polariseur variable étant apte à délivrer une lumière de sortie (polarisée) (notamment côté première et deuxième électrodes) avec un deuxième ratio de polarisation défini par :

[Math 2]

$$rp2 = \frac{T'2}{T'1+T'2}$$

rp2 étant d'au moins 30%, et même d'au moins 50% ou 60%
T'1 étant la transmission totale à une longueur d'onde entre 380 et 800nm suivant le premier axe voire même la transmission totale moyennée au moins entre 400 et 600nm et même de 380 à 640nm et T'2 étant la transmission totale suivant le deuxième axe à la longueur d'onde entre 380 et 800nm voire même la transmission totale moyennée au moins entre 400 et 600nm et même de 380 à 640nm, pour une deuxième tension non nulle entre les première et deuxième électrodes.

Naturellement le polariseur variable présente alors une multitude d'états fonctionnels à l'état allumé. Il existe en particulier une tension seuil à partir duquel la force d'ancrage des cristaux liquides est vaincue pour une partie des cristaux liquides et plus on augmente la tension plus les cristaux liquides se réorientent jusqu'à une tension de saturation qui est de préférence d'au plus 80V.

On peut alors avoir un ratio de polarisation qui varie en fonction de la tension U2 appliquée.

L'anisotropie diélectrique de la couche électroactive est non nulle et peut être négative ou positive.

Selon l'invention revendiquée, le polariseur variable comporte :

- une couche d'ancrage planaire unidirectionnelle selon une direction r1 sur (en contact avec) une face principale de la couche électroactive et sur (en contact avec) les première et deuxième électrodes, en particulier P1 est normal à r1 et P2 parallèle à r1
- et une autre couche d'ancrage planaire unidirectionnelle selon une direction r2 de préférence distincte de r1 sur (en contact avec) une autre face principale de la couche électroactive.

Selon l'invention revendiquée, r1 forme un angle de 90°±15° et mieux de 90°±5° avec r2 (les cristaux liquides nématiques ayant alors une forte torsion à l'état off) :

- r0 forme un angle d'au plus 15° et même d'au plus 5° avec r1 et les cristaux liquides ont une anisotropie diélectrique positive
- ou r0 forme un angle de 90°±15° et mieux de 90°±5° avec r1 et les cristaux liquides ont une anisotropie diélectrique négative.

Le système optique peut comporter un polariseur statique faisant face audit polarisateur variable, polariseur statique défini par un axe de polarisation notamment agencé pour absorber P1 (axe de polariseur normal à P1) ou agencé pour absorber P2 (axe de polariseur normal à P2).

Comme polariseur statique on peut citer un film plastique à colorants dichroïques étirés selon une direction formant axe de polarisation (qui est orthogonal à la direction d'absorption de la lumière). En particulier le polariseur statique peut être conçu pour bloquer une polarisation donnée.

Plusieurs cas sont possibles

- la lumière en sortie du polariseur variable est suivant P1 (état off) et le polariseur bloque sensiblement P1 de sorte que le système optique à l état off est occultant/assombrissant.
- la lumière en sortie du polariseur variable est globalement suivant P2 (état on) et le polariseur bloque sensiblement P1 de sorte que le système optique à l état on reste suivant P2 et est non occultant.
- la lumière en sortie du polariseur variable est suivant P1 (état off) et le polariseur bloque sensiblement P2 de sorte que le système optique à l état off reste suivant P1 et est non occultant.
- la lumière en sortie du polariseur variable est globalement suivant P2 (état on) et le polariseur bloque sensiblement P2 de sorte que le système optique à l état on est occultant/assombrissant.

Le polariseur statique, de préférence de forme similaire au polariseur variable, peut s'étendre sur tout ou partie du polariseur variable en fonction des besoins.

Le système optique peut être sans élément optique susceptible de dépolariser la lumière entre le polariseur variable et le polariseur statique.

Le système optique peut être de toute taille car les polariseurs peuvent être réalisés aisément sur des surfaces de longueur d'au moins 1m.

Entre les polariseurs on peut souhaiter éviter de mettre un diffuseur.

Bien entendu on peut éviter tout élément opaque, occultant ou réfléchissant entre les polariseurs variable et statique.

Si on ajoute un dispositif notamment électrocommutable sensible à la polarisation notamment une direction caractéristique b (une couche d'ancrage unidirectionnelle suivant b d'un dispositif à cristaux liquides PSLC à domaine coniques focaux) on peut choisir de passer (pour état off du dispositif)

a) de l'état off clair à l'état on masquant (avec masquage de plus en plus effectif en fonction de U2) si P1 perpendiculaire à b

b) ou de l'état off masquant à l'état on clair (avec masquage de moins en moins effectif en fonction de U2) si P1 parallèle à b.

Le dispositif notamment électrocommutable sensible à la polarisation, de préférence de forme similaire au polariseur variable, peut s'étendre sur tout ou partie du polariseur variable en fonction des besoins.

Le système optique peut être sans élément optique susceptible de dépolariser la lumière entre le polariseur variable et ce dispositif sensible à la polarisation.

Le système optique peut être de toute taille car ces dispositifs peuvent être réalisés aisément sans des surfaces de longueur d'au moins 1m.

Entre le polariseur variable et ce dispositif sensible à la polarisation on peut souhaiter éviter de mettre un diffuseur.

Bien entendu on peut éviter tout élément opaque, occultant ou réfléchissant entre polariseur variable et ce dispositif sensible à la polarisation.

Dans une réalisation, le polariseur variable et un polariseur statique (de préférence film plastique à colorant dichroïque) et/ou un dispositif électrocommandable sensible à la polarisation sont disjoints et liés par une couche de liaison transparente notamment une colle optique ou une couche thermoplastique notamment d'intercalaire de feuilletage ou le polariseur variable comporte un élément porteur des première et deuxième électrode qui forme ledit polariseur statique.

La couche de liaison transparente peut être incolore ou teintée.

La couche de liaison transparente peut être d'épaisseur d'au plus 0,5mm ou même 0,1mm.

Le système optique peut être plan ou courbé, flexible pour s'adapter aux courbures par exemple d'un vitrage (monolithique ou feuilleté). Il est alors courbé sur le vitrage monolithique ou par exemple au sein dudit vitrage feuilleté.

Le système optique selon l'invention peut comporter face à face avec le polariseur variable, un dispositif (électrocommandable) sensible à la polarisation notamment ayant une réponse optique dépendant de l'état de polarisation d'une lumière incidente sur ledit dispositif en particulier dispositif électrocommandable diffusion variable par cristaux liquides nématiques comportant de préférence des domaines coniques focaux notamment comme décrit dans la demande WO2020/065038.

On préfère des domaines de défauts lignes car le flou (le pouvoir diffusant) est remarquable. On préfère des domaines coniques focaux de (méso)phase smectique comme détaillé dans la demande WO2020/065038.

Les domaines de défauts comprennent généralement chacun deux lignes de défauts (deux défauts lignes), les coniques focales et qui vont par paires, notamment un elliptique avec différents degrés d'excentricités et l'autre hyperbolique, ainsi le nom donné est « Elliptic-Hyperbolic focal conic domain » ou EHFCD en anglais.

De préférence, nématique et les domaines sont des domaines coniques focaux notamment de mésophase smectique (mésophase P'), en particulier avec deux défauts lignes de préférence l'un elliptique et l'autre hyperbolique (EHFCD).

Les domaines coniques focaux notamment EHFCD forment de préférence un réseau linéaire parallèle à la direction b.

Les cristaux liquides de ce dispositif sensible à la polarisation ont de préférence globalement un degré d'organisation dans une direction donnée b en surface FA1 ou en surface FA2 (dite face d'orientation planaire). Leur directeur n -ou axe long- est globalement suivant cette première direction b b est en particulier l'axe (de brossage) d'une couche d'ancrage planaire unidirectionnel en contact avec cette face d'orientation planaire (générant interactions entre cristaux liquides avec cette couche solide).

Ledit dispositif électrocommandable à diffusion variable par cristaux liquides comporte une couche électroactive avec les cristaux liquides (nématiques comportant de préférence des domaines coniques focaux) la direction b formant un angle de 0°±15°ou 0°±5° avec la polarisation P1 de la lumière de sortie à l'état off du polariseur variable (côté première et deuxième électrodes) ou 0°±15° ou 0°±5 avec r1 qui est perpendiculaire à P1 ) ou 90°±15 ou 90°±5 avec la polarisation P1I (ou 90°±15° avec r1).

Ainsi selon l'invention la combinaison dudit dispositif électrocommandable à diffusion variable sensible à la polarisation plus dudit polariseur variable permet d'avoir une large gamme de propriétés optiques disponibles en particulier une large gamme de flou et de transmission lumineuse.

Intégré à un vitrage de bâtiment ou de véhicule cedit dispositif sensible à la polarisation peut être indifféremment orienté vers l'extérieur ou vers l'intérieur

Ledit dispositif sensible à la polarisation, de préférence de forme similaire au polariseur variable, peut s'étendre sur tout ou partie du polariseur variable en fonction des besoins. Le système optique peut être sans élément optique susceptible de dépolariser la lumière entre le dispositif sensible à la polarisation et le polariseur variable.

Entre le dispositif sensible à la polarisation et le polariseur variable on peut souhaiter éviter de mettre un diffuseur.

Bien entendu on peut éviter tout élément opaque, occultant ou réfléchissant entre le dispositif sensible à la polarisation et le polariseur variable.

Le système optique dispositif sensible à la polarisation plus le polariseur variable peut être d'épaisseur d'au plus 1cm ou 5 mm ou 1mm.

Le dispositif sensible à la polarisation peut être d'épaisseur d'au plus 5 mm ou 1mm ou 0,5mm.

Les paramètres influençant les propriétés optiques du dispositif sensible à la polarisation sont notamment :

- le choix des cristaux liquides notamment du mélange de mésogènes (en particulier pour la gamme de température de travail et le niveau de tension U1 pour le « désancrage » à l'état on) et leur anisotropie diélectrique
- l'épaisseur de couche électroactive
- le choix des couches d'ancrages

En particulier, la valeur du flou sans champ électrique appliqué (ou pour une tension donnée) peut varier en fonction de la taille ou du type de défauts bidimensionnels, de leur densité, de l'épaisseur de la matière électroactive, du choix des cristaux liquides, du réseau de polymère (taux de réticulation, condition de polymérisation), du monomère, et de la différence d'indices de réfraction du polymère avec les cristaux liquides.

En particulier, la valeur du flou sans champ électrique appliqué (ou pour une tension donnée) va varier en fonction de l'orientation du ou des cristaux liquides en particulier en fonction de l'angle entre l'axe long (moléculaire) des premiers cristaux liquides et de l'axe de polarisation d'une lumière polarisée suivant le plan parallèle à la surface de la première couche électroactive.

Le flou H est de préférence défini comme le rapport entre la transmission lumineuse intégrée associée à de la transmission diffuse TD et la TL.

Avantageusement, le champ électrique E1 du dispositif sensible à la polarisation est alternatif et de préférence la tension électrique appliquée U1 est d'au plus 120V De préférence, les électrodes sont dans des plans distincts, et les cristaux liquides ont une anisotropie diélectrique positive (indépendante de la fréquence du champ électrique E1). E2 et/ou E1 est de préférence alternatif avec une fréquence à partir de 50Hz, par exemple une fréquence de 100Hz, 1kHz ou 2kHz. Par tension on entend la tension pic (Vpeak en anglais).

Le dispositif électrocommandable à diffusion variable a une réponse optique dépendant de la polarisation de la lumière incidente. Cette réponse différenciée à la polarisation de la lumière est induite :

- par le facteur de forme, la structure interne des défauts topologiques bidimensionnels en particulier des défauts lignes en particulier des défauts lignes de domaines coniques focaux non toriques-(non « TFCD » en anglais)-de mésophases smectiques, et/ou l'arrangement des différents domaines (notamment domaines coniques focaux des mésophases smectiques y compris « TFCD » en anglais) en particulier leur forme, leur orientation leur degré de symétrie, distribués par exemple de manière aléatoire, irrégulière etc, distribution dictée par les conditions d'ancrage (couche d'ancrage 2D ajustables à façon par exemple ancrage multidirectionnel).

Un exemple de diverses architectures de domaines coniques focaux des smectiques (autrement dit domaine à conique focale) sensible à la polarisation est donné dans la publication intitulée « Smectic Layer Origami Preprogrammed Photoalignement » de Ling Ling Ma et autres Advances Materials 2017 1606671 pages 1 à 7.

Dans une réalisation préférée, le polariseur variable, dans un premier état fonctionnel qui est l'état off, est apte à délivrer une lumière avec une polarisation P1, le dispositif sensible à la polarisation comporte une couche d'ancrage directionnelle suivant une première direction b en surface, le polariseur variable est agencé tel que P1 formant un angle avec b de $0°\pm20°$ ou mieux de $0°\pm5°$ (en particulier r2 formant un angle avec b de $0°\pm20°$ ou mieux de $0°\pm5°$).

Dans une réalisation le polariseur variable, dans un premier état fonctionnel qui est l'état off, est apte à délivrer une lumière avec une polarisation P1, le dispositif sensible à la polarisation comporte une couche d'ancrage directionnelle suivant une première direction b en surface, le polariseur variable est agencé tel que P1 formant un angle avec b de $90°\pm20°$ ou mieux $\pm5°$, (en particulier r1 formant un angle avec b de $90°\pm20°$ ou mieux $\pm5°$).

Comme couche d'ancrage planaire unidirectionnel, on peut utiliser un film de fluoropolymère tel que le polytétrafluoroéthylène PTFE ou téflon (avec les chaines de polymères alignées selon la direction de déplacement de la barre de téflon lors du dépôt).

L'ancrage planaire unidirectionnel fixe orientation zénithal et azimutal du directeur n du cristal liquide), par exemple par texturation, brossage de la couche d'ancrage planaire (rubbing en anglais), par exemple comportant nano ou microsillons.

On peut utiliser un tissu en velours pour le brossage.

Pour un ancrage normal, les couches les plus couramment utilisées sont à base l'octyltrichlorosilane (OTS) et chlorure de N,N-diméthyl-N-octadécyl-3-aminopropyltriméthoxysilane (DMOAP) ou des polyimides aussi.

Une couche à base dodécylsulfate de sodium (SDS) ou encore des mélanges d'alcanethiols peuvent aussi générer un ancrage normal.

L'une ou les couches d'ancrage sont par exemple déposées par voie liquide.

Une couche d'ancrage est par exemple :

- de préférence diélectrique (notamment amorphe, polymérique et/ou minérale, un verre), avec une fonctionnalisation de la surface, en particulier, une couche à base de polyalcool vinylique (PVA), de polyimide par exemple pour un ancrage planaire.

Le colorant dichroïque peut être une molécule organique anisotropique qui présente une anisotropie optique, est allongée, notamment en forme de bâtonnet. Il est à l'état dissous dans la matière notamment dissous dans les cristaux liquides. Le % de (chaque) colorant dichroïque est ajusté pour ne pas dépasser la limite de solubilité. On choisit en particulier un (ou plus) colorant dichroïque compatible chimiquement avec les cristaux liquides.

En particulier, le (chaque) colorant dichroïque (allongé, en bâtonnet) peut présenter un axe long moléculaire et l'absorption varie suivant l'axe long ou l'axe court.

Les colorants dichroïques est asservi à l'orientation des cristaux liquides de la couche électroactive), le mouvement (la rotation) des cristaux liquides sous l'effet du champ électrique (E2) en jeu, tendant à s'aligner avec le champ électrique, entrainant le mouvement (la rotation) des colorants dichroïques, l'axe long ayant tendance aussi à l'aligner avec le champ électrique.

L'absorption d'un colorant dichroïque varie donc en fonction de son orientation par rapport à la polarisation de la lumière incidente. A l'inverse un colorant non dichroïque, ne présentant pas d'anisotropie d'absorption n'est pas ou peu sensible au champ électrique et même ne va pas changer l'absorption. De tels colorants peuvent être ajoutés pour ajuster la teinte souhaitée.

Il existe plusieurs familles de colorants dichroïques notamment ceux décrit dans la publication de Mark T Sims intitulée « dyes as guests in ordered systems : current understanding and future directions » Liquid Crystals, 2016, Vol 43, NOS. 13-15, page 2363-2374.

Les colorants dichroïques selon l'invention peuvent être les colorants azoïques, avec AZO (-N=N), notamment en forme de bâtonnet. On peut induire des modifications chimiques aux colorants azoïques par exemple avec des groupements esters incorporés (cf p2366 de la publication précitée).

D'autres colorants sont des anthraquinones généralement en anneau liés (fused ring en anglais) ou en bâtonnet en ajoutant des substituants. Des exemples de colorants dichroïques (chromophores) sont en table 1 de cette publication précitée.

Des exemples de colorants dichroïques convenant pour l'invention sont en outre cités dans le livre intitulé « Electrooptic effect in Liquid Crystal Materials » de L.M Blinov et autres, édité par Springer en 1994 en particulier dans le chapitre 2.3 nommé Optical Anisotropy and Dichroïsm et pages 66 à 68 incluant table 2.2.

Par exemple pour un colorant bleu on peut choisir comme longueur d'onde de maximum d'absorption 630nm ±10nm et comme longueur d'onde hors de la bande d'absorption 430nm±50nm ou ±10nm. Par exemple on peut citer le colorant M412 vendu par la société Mitsui Chemicals.

Par exemple pour un colorant rouge on peut choisir comme longueur d'onde de maximum d'absorption 500nm ±10nm et comme longueur d'onde hors de la bande d'absorption 650nm±50nm ou ±10nm. Par exemple on peut citer le colorant SI-426 vendu par la société Mitsui Chemicals.

Par exemple pour un colorant jaune on peut choisir comme longueur d'onde de maximum d'absorption 400nm ±10nm et comme longueur d'onde hors de la bande d'absorption 600nm±50nm ou ±10nm. Par exemple on peut citer le colorant SI-486 vendu par la société Mitsui Chemicals.

Par exemple pour un colorant noir on peut citer le colorant SI-428 vendu par la société Mitsui Chemicals.Le polariseur variable peut comporter :

- un premier élément diélectrique transparent, porteur des première et deuxième électrodes en bandes (configuration coplanaire) et même de la couche d'ancrage de préférence unidirectionnelle selon r1, premier élément choisi parmi une feuille de verre ou une feuille polymérique transparente distinct ou correspondant audit support diélectrique
- un deuxième élément diélectrique transparent, porteur d'au moins une couche d'ancrage de préférence unidirectionnelle selon r2, deuxième élément choisi parmi une feuille de verre ou une feuille polymérique transparente (avec une éventuelle couche anti-rayures externe)

Le système optique peut être plan ou courbé, flexible pour s'adapter aux courbures par exemple d'un vitrage (monolithique ou feuilleté). Il est alors courbé sur le vitrage monolithique ou par exemple au sein dudit vitrage feuilleté.

L'invention concerne également un vitrage feuilleté éventuellement bombé comportant :

- une première feuille de verre additionnelle notamment d'épaisseur de 0,7mm à 4mm
- un intercalaire de feuilletage thermoplastique notamment EVA ou PVB
- une deuxième feuille de verre additionnelle notamment d'épaisseur de 0,7mm à 4mm ou même de moins de 0,7mm ou encore une feuille de plastique comme un polycarbonate ou un PMMA (notamment avec un intercalaire de feuilletage en PU),

les faces principales internes dites F2 et F3 des première et deuxième feuilles de verre additionnelles étant en regard le système optique tel que décrit précédemment étant de préférence entre les faces F2 et F3 et de préférence dans l'intercalaire de feuilletage. De préférence le premier élément porteur des premières et deuxième électrodes étant polymérique et même le deuxième élément (coté couche d'ancrage avec r2) étant polymérique.

De préférence l'intercalaire feuilletage thermoplastique entoure le chant du système optique (polariseur variable etc).

La tranche du système optique peut être en retrait par rapport à la tranche la plus externe de l'intercalaire de feuilletage (ou de la première feuille).

De préférence les éventuelles feuilles porteuse des couches (substrat, support, première et deuxième éléments) sont de préférence d'épaisseur d'au plus 0,7mm et même d'au plus 0,3 ou 0,2mm. Pour ceux en verre on peut choisir du verre mince (moins de 1mm) et même ultramince ('UTG ' en anglais).

L'une des feuilles de verre additionnelle peut être teintée et l'autre clair ou extraclair. L'intercalaire de feuilletage thermoplastique peut être incolore (clair, extraclair) ou teinté. Pour lesdits éléments porteurs ou encore ou pour une feuille de verre additionnelle ou un vitrage d'un vitrage feuilleté et/ou multiple on peut choisir un verre clair ou extra-clair. Un verre clair contient typiquement une teneur pondérale en oxyde de fer de l'ordre de 0,05 à 0,2%, tandis qu'un verre extra-clair contient généralement environ 0,005 à 0,03% d'oxyde de fer.

La feuille de verre additionnelle ou un vitrage d'un vitrage feuilleté et/ou multiple, peut être toutefois teinté par exemple en bleu, vert, gris ou bronze.

Une feuille de verre additionnelle teinté ou un vitrage teinté d'un vitrage feuilleté et/ou multiple, peut présenter de préférence une transmission lumineuse $T_L$ inférieure ou égale à 10%

Le verre est de préférence de type silico-sodo-calcique mais il peut également être en verre de type borosilicate ou alumino-borosilicate. L'épaisseur du verre est généralement comprise dans un domaine allant de 0,5 mm à 19 mm, de préférence de 0,7 à 9 mm, notamment de 2 à 8 mm, voire de 4 à 6 mm.

L'intercalaire de feuilletage thermoplastique assure une liaison avec un élément rigide ou flexible. Cet intercalaire de feuilletage polymère peut être, notamment, une couche à base de polybutyral de vinyle (PVB), d'éthylène vinylacétate (EVA), de polyéthylène (PE), de polychlorure de vinyle (PVC), d'uréthane thermoplastique, de polyuréthane PU, de ionomère, d'adhésif à base de polyoléfine, de silicone thermoplastique ou en résine pluri ou mono-composants, réticulable thermiquement (époxy, PU) ou aux ultraviolets (époxy, résine acrylique).

L'intercalaire PVB peut être en coin donc avec une section transversale diminuant en forme en coin du haut vers le bas du vitrage feuilleté pour éviter une double image dans le cas d'un affichage tête haute (HUD en anglais), tout particulièrement pour un pare-brise. L'intercalaire PVB est éventuellement acoustique et/ou teinté. L'intercalaire PVB acoustique peut comprendre au moins une couche dite centrale en matériau plastique viscoélastique aux propriétés d'amortissement vibro-acoustique notamment à base de polyvinylbutyral (PVB) et de plastifiant, et comprenant en outre deux couches externes en PVB standard, la couche centrale étant entre les deux couches externes. Eventuellement l'une ou les deux couches externes a une section transversale diminuant en forme en coin du haut vers le bas du vitrage feuilleté, la couche en matériau plastique viscoélastique aux propriétés d'amortissement vibro-acoustique ayant une section transversale constante du haut vers le bas du vitrage feuilleté. Comme exemple de feuillet acoustique on peut citer le brevet EP0844075.

Le premier et/ou deuxième vitrage du vitrage feuilleté peut (selon le rendu esthétique, l'effet optique souhaité) être un verre clair (de transmission lumineuse $T_L$ supérieure ou égale à 90% pour une épaisseur de 4mm), par exemple un verre de composition standard sodocalcique le Planilux® de la société Saint-Gobain Glass, ou extra-clair ($T_L$ supérieure ou égale à 91,5% pour une épaisseur de 4 mm), par exemple un verre silico-sodo-calcique avec moins de 0,05% de Fe III ou de $Fe_2O_3$ le verre Diamant® de Saint-Gobain Glass, ou Optiwhite® de Pilkington, ou B270® de Schott, ou d'autre composition décrite dans le document WO04/025334. On peut aussi choisir le verre Planiclear® de la société Saint-Gobain Glass.

Le verre du premier et/ou deuxième vitrage peut être neutre (sans coloration), ou (légèrement) teinté notamment gris ou vert, tel le verre TSA de la société Saint-Gobain Glass. Le verre du premier et/ou deuxième vitrage peut avoir subi un traitement chimique ou thermique du type durcissement, recuit ou une trempe (pour une meilleure résistance mécanique notamment) ou être semi trempé.

La transmission lumineuse $T_L$ peut être mesurée selon la norme ISO 9050 :2003 en utilisant l'illuminant D65, et est la transmission totale (notamment intégrée dans le domaine du visible et pondérée par la courbe de sensibilité de l'oeil humain), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4mm selon la norme ISO 9050 :2003.

Le système optique selon l'invention peut être intégré dans un vitrage notamment monolithique ou feuilleté (plan et/ou bombé), et le système optique forme une bande notamment périphérique sur une portion d'une face principale du vitrage.

On peut utiliser le système optique selon l'invention tel que défini précédemment dans un véhicule ou bâtiment.

Il peut être utilisé notamment comme :

- cloison interne (entre deux pièces ou dans un espace) dans un bâtiment, dans un véhicule terrestre, ferroviaire, maritime ou aérien (entre deux compartiments, dans un taxi, bus, train etc), notamment comme paroi vitrée de douche, baignoire,
- porte vitrée (d'entrée ou de service), fenêtre (simple, double, triple vitrage), plafond, dallage (sol, plafond), porte de WC, une partie vitrée de meuble urbain ou domestique
- vitrage d'un véhicule automobile (voiture, camion, bus, car ..) donc terrestre, ferroviaire, maritime (bateau) : pare-brise, vitrage latéral, toit ..
- écran de projection ou rétroprojection,
- façade de magasin, vitrine notamment d'un guichet.

Naturellement, il peut former tout ou partie d'un vitrage (une cloison et fenêtre type imposte etc.).

Un vitrage de bâtiment peut donc être porteur du système optique tel que décrit précédemment notamment monolithique, double ou triple vitrage (avec ou sans vitrage feuilleté) cloison, fenêtre...

Un vitrage de véhicule notamment routier peut donc porteur du système optique tel que décrit précédemment en particulier pare-brise (le système optique formant bande(s) périphérique(s)) , toit vitré, vitrage latéral (monolithique ou feuilleté) notamment custode. Le vitrage feuilleté selon l'invention, en particulier pour voiture individuelle (parebrise etc) ou camion, peut être courbé (bombé) suivant une ou plus directions notamment pour la première feuille, la deuxième et un rayon de courbure de 10cm à 40cm. Il peut être plan pour les bus, trains, tracteurs.

Le système optique selon l'invention peut être intégré au sein d'un vitrage feuilleté et notamment bombé, est entre des premier et deuxième vitrages respectivement dits vitrages extérieur et intérieur et forme une bande périphérique sur une portion supérieure du vitrage, la tranche dite externe de l'empilement étant masqué de l'extérieur par une première couche périphérique opaque notamment un émail sur le vitrage extérieur (de préférence en face F2), et/ou la tranche dite interne de l'empilement étant masqué de l'intérieur par une couche périphérique opaque notamment un émail sur le vitrage intérieur (en face F4 par exemple voire face F3).

Le vitrage feuilleté bombé selon l'invention notamment pare-brise ou vitrage latéral, peut avoir une $T_L$ -dans le clair de vitre- qui est de préférence d'au moins 70% et même d'au moins 75% ou même d'au moins 80%.

Le vitrage feuilleté bombé selon l'invention, notamment toit vitré, peut avoir une transmission lumineuse $T_L$ d'au plus 10% et même de 1 à 6%.

Pour un toit automobile, on préfère l'un au moins ou tous les critères suivants :

- une transmission énergétique $T_E$ d'au plus 10% et même de 4 à 6%,
- une réflexion énergétique $R_E$ (de préférence côté face F1) d'au plus 10%, mieux de 4 à 5%
- et une transmission totale de l'énergie solaire TTS <30% et même <26%, même de 20 à 23%.

Le bombage des premier et deuxième vitrages (pare-brise notamment) peut être dans une ou plusieurs directions par exemple décrit dans le document WO2010136702.

Afin de limiter l'échauffement dans l'habitacle ou de limiter l'usage d'air conditionné, l'un des vitrages au moins (de préférence le verre extérieur) est teinté, et le vitrage feuilleté peut comporter également une couche réfléchissant ou absorbant le rayonnement solaire, de préférence en face F4 ou en face F2 ou F3, en particulier une couche d'oxyde transparent électro-conducteur dite couche TCO (en face F4) ou même un empilement de couches minces comprenant au moins une couche TCO, ou d'empilements de couches minces comprenant au moins une couche d'argent (en F2 ou F3), là où chaque couche d'argent étant disposée entre des couches diélectriques.

Le système optique selon l'invention peut être utilisé en combinaison avec d'autres dispositifs électrocommandables tels que ceux avec des systèmes électroluminescents (ensemble de diodes inorganiques ponctuels DEL, diodes organiques ou OLED, TFEL (à couches minces)). Les deux peuvent être en regard ou adjacent au sein d'un vitrage feuilleté (de l'intercalaire de feuilletage.

Le système optique selon l'invention peut être utilisé notamment dans un vitrage feuilleté, en combinaison avec un autre dispositif électrocommandable tel qu'un dispositif électrocommandable électrominescent, en particulier, LED, OLED, TFEL.D'autres détails et caractéristiques de l'invention apparaîtront de la description détaillée qui va suivre, faite en regard des dessins annexés suivants et dans lesquelles:

La figure 1 représente une vue en coupe schématique d'un système optique 1000 comportant un polariseur variable électrocommandable par cristaux liquides et colorant dichroïque 100 associé à un polariseur statique 10 dans un premier mode de réalisation de l'invention.

La figure 2 est une vue de face d'électrodes en bandes et alimentées deux à deux utilisées dans le polariseur variable de la figure 1.

La figure 3 représente une vue en coupe schématique d'un système optique 1000' composé d'un polariseur variable électrocommandable par cristaux liquides et colorant dichroïque 100 associé à un polariseur statique 10' dans un deuxième mode de réalisation de l'invention.

La figure 4 représente une vue en coupe schématique d'un système optique 1001 composé d'un polariseur variable électrocommandable par cristaux liquides et colorant dichroïque 100 associé à un dispositif électrocommandable sensible à la polarisation 20 dans un troisième mode de réalisation de l'invention.

La figure 5 est une vue partielle schématique de principe en perspective du polariseur variable de la figure 1 dans un premier état fonctionnel qui est l'état off.

La figure 6 est une vue partielle schématique de principe en perspective du polariseur variable de la figure 1 dans un deuxième état qui est un état on à une tension donnée U2.

La figure 7 est une vue partielle schématique de principe en perspective d'un système 1002 comportant le polariseur variable et d'un polariseur statique alternatif de structure similaire au polariseur variable mais sans électrodes dans un premier état fonctionnel du polariseur variable qui est l'état off.

La figure 8 est une vue partielle schématique de principe en perspective du polariseur variable et du polariseur statique alternatif de la figure 7 dans un deuxième état fonctionnel du polariseur variable qui est l'état on.

La figure 9 est une vue partielle schématique de principe en perspective du polariseur variable de la figure 1 comportant le polariseur variable et d'un polariseur statique alternatif de structure similaire au polariseur variable mais sans électrodes dans un premier état fonctionnel du polariseur variable qui est l'état off, dans une variante de la figure 7 le polariseur statique alternatif ayant tourné de 90°.

La figure 10 est une vue partielle schématique de principe en perspective du polariseur variable et du polariseur statique alternatif de la figure 9 dans un deuxième état fonctionnel qui est l'état on.

La figure 11 montre un ensemble de cinq courbes correspondant à la transmission totale TT en fonction de la longueur d'onde λ entre 380 et 630nm du polariseur variable illuminé avec une lumière polarisée (parallèle à) suivant r2.

La figure 12 montre un ensemble de cinq courbes correspondant à la transmission totale TT en fonction de la longueur d'onde λ entre 380 et 630nm du polariseur variable illuminé avec une lumière polarisée normal à r2.

La figure 13 représente une vue en coupe schématique d'un vitrage porteur un système optique 2000 selon l'invention.

La figure 14 représente une vue en coupe schématique d'un vitrage feuilleté porteur d'un système optique 3000 selon l'invention.

La figure 15 représente une vue en coupe schématique d'un vitrage feuilleté porteur d'un système optique 3000 selon l'invention dans une variante de la figure 14 en rajoutant un dispositif électrocommandable sensible à la polarisation 20 en plus de polariseur variable 100 et du polariseur statique 10.

Les figures 16 et 17 représentent respectivement une vue de face et en coupe schématique d'un vitrage feuilleté porteur d'un système optique 4000 selon l'invention.

Les éléments sur les figures ne sont pas représentés à l'échelle.

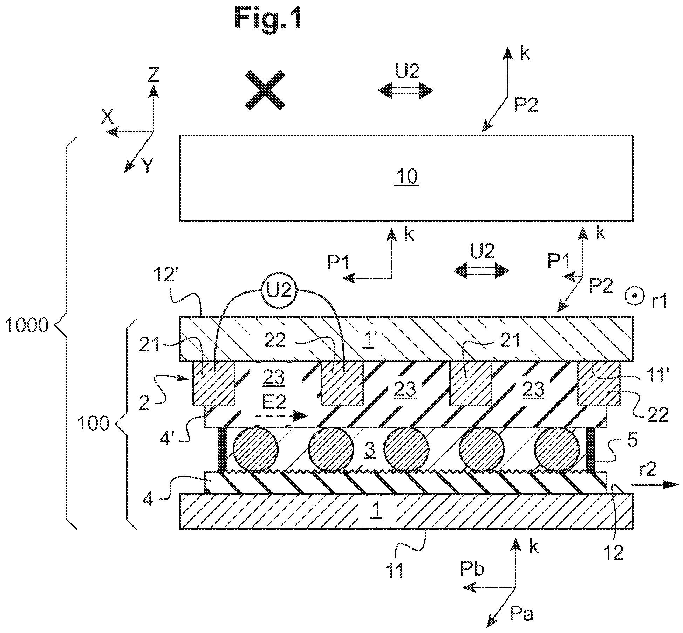

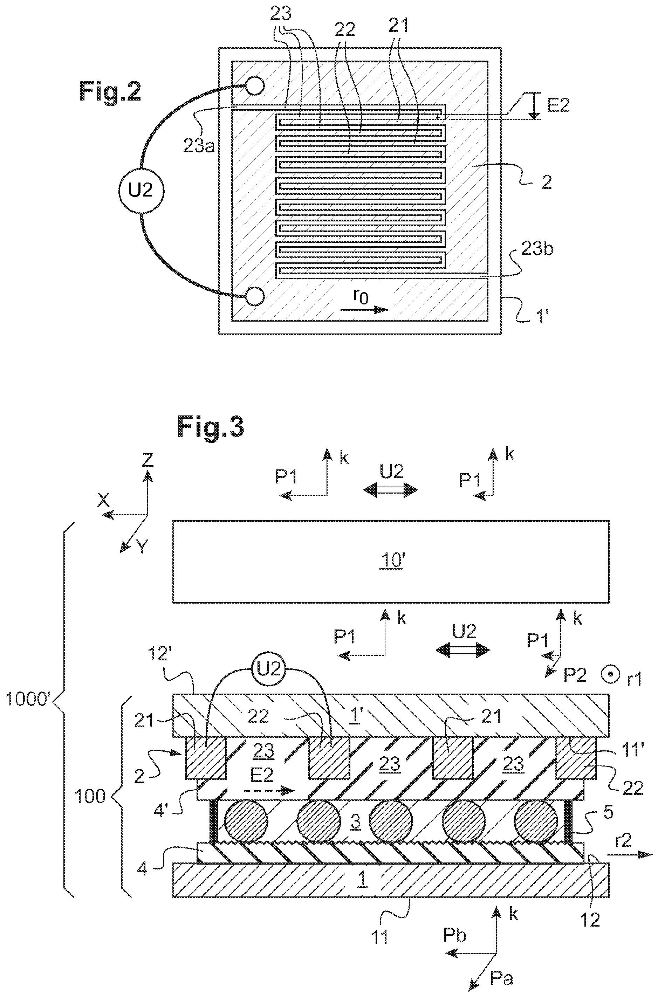

La figure 1 représente une vue en coupe schématique d'un système optique 1000 comportant un polariseur variable électrocommandable par cristaux liquides et colorant dichroïque 100 associé à un polariseur statique 10 (film plastique étiré à colorant dichroïque) dans un premier mode de réalisation de l'invention. La figure 2 est une vue de face d'électrodes en bandes et alimentées deux à deux utilisées dans le polariseur variable 100 de la figure 1.

On définit un repère orthonormé X, Y et Z.

Le polariseur variable électrocommandable 100 est ici caractérisé par une première direction r1 d'ancrage d'une surface des cristaux liquides (à l'état éteint) coté sortie (du côté de ses électrodes coplanaires en bandes 21,22) et même par une deuxième direction r2 d'ancrage d'une surface des cristaux liquides coté opposé à la sortie.

Le polariseur variable 100 présente des premier et deuxième états fonctionnels et :

- dans le premier état fonctionnel qui est l'état éteint ici, à partir d'une lumière incidente non polarisée (du côté de ses électrodes coplanaires en bandes 21,22) (représentée schématiquement par des composantes Pa et Pb normales de même intensité, avec k le vecteur de propagation de la lumière suivant Z), le polariseur variable est apte à délivrer une lumière de sortie polarisée avec une première composante du champ électrique polarisée P1 suivant un axe X (normale à r1) et une deuxième composante du champ électrique polarisée P2 suivant un axe Y normal à Y, avec un premier ratio de polarisation défini par

[Math 3]

$$rp1 = \frac{T1}{T1+T2}$$

rp1 étant de préférence d'au moins 70% ou 90%, et même d'au moins 95% T1 étant la transmission totale à une longueur d'onde entre 380 et 800nm suivant X et T2 étant la transmission totale suivant Y à la longueur d'onde entre 380 et 800nm (P1 est donc ultra dominant par rapport à P2)

- et dans le deuxième état fonctionnel qui est un état on, de mise sous tension U2 (entre électrodes en bandes coplanaires, deux à deux):

à partir de la lumière incidente non polarisée, le polariseur variable étant apte à délivrer une lumière de sortie polarisée avec un deuxième ratio de polarisation défini par

[Math 4]

$$rp2 = \frac{T'2}{T'1+T'2}$$

rp2 étant d'au moins 30%, et même d'au moins 50% ou 60% T'1 étant la transmission totale à une longueur d'onde entre 380 et 800nm suivant le premier axe et T'2 étant la transmission totale suivant le deuxième axe à la longueur d'onde entre 380 et 800nm pour une tension U2b entre les troisième et quatrième électrodes P2 est de préférence majoritaire par rapport à P1.

La polarisation de la lumière de sortie du polariseur variable peut être elliptique

Naturellement le polariseur variable présente alors une multitude d'états fonctionnels à l'état allumé. Il existe en particulier une tension seuil à partir duquel la force d'ancrage des cristaux liquides est vaincue pour une partie des cristaux liquides et plus on augmente la tension plus les cristaux liquides se réorientent jusqu'à une tension de saturation qui est de préférence d'au plus 80V.

On peut alors avoir un ratio de polarisation $r(U2) = \frac{T2}{T1+T2}$ qui varie en fonction de la tension U2 appliquée.

De manière optionnelle, en fonction des besoins, on rajoute un polariseur statique 10 de sorte que dans l'état off il n' y a plus de lumière (ou quasi) - symbolisé par la croix sur

la figure 1 et à l'état on (à U2) il reste un peu de lumière suivant l'axe de P2.

Plus précisément, le polariseur variable 100 comporte un empilement de couches (physiques, solides) dans cet ordre :

- un premier élément diélectrique transparent 1' avec des faces principales 11' et 12' ici un verre de 1,1mm -ou en variante plastique comme du PET
- des première et deuxième électrodes transparentes en bandes 2 disjointes comportant des premières bandes 21 et des deuxièmes/premiers bandes 22 entre des bandes isolantes 23, - couche d'oxyde d'indium et d'étain d'ITO de résistance carré 100ohm/carré, plus largement entre 5 et 300ohm/carré
- une première couche d'ancrage planaire unidirectionnelle 4' transparente suivant une direction r1 suivant Y, sur le premier élément diélectrique transparent 1' (face 11') et sur les bandes 21 , 22
- en contact avec cette première couche d'ancrage 4', une couche électroactive diélectrique colorée 3 avec une face principale dite face FA3 coté autre dispositif et une face principale dite face FA4 opposée, ici d'épaisseur Ep1 (moins de 20$\mu$m) en une première matière comportant

  - des cristaux liquides
  - un ou des colorants dichroïques (à l'état dissous)
  - des espaceurs étant répartis dans la matière ici des billes de verres
  - la couche 3 étant scellée en périphérie par un joint polymérique 5 par exemple en époxy en acrylate ici en cyanoacrylate

- une deuxième couche d'ancrage 4 transparente, ici ancrage unidirectionnelle suivant une direction r2 perpendiculaire à r1, parallèle à X
- un deuxième élément diélectrique transparent 1 (de la couche 4) avec des faces principales 11 et 12, ici un verre de 1,1mm -ou en variante plastique comme du PET Pour l'alimentation électrique via une source électrique, des rubans conducteurs (non montrés), notamment métalliques par exemple en cuivre sont fixés par exemple par collage le long et sur des bords périphériques et sont en contact avec les électrodes 21, 22 (un ruban par électrode, les rubans étant de préférence sur des bords opposés). Ces rubans sont ensuite reliés à une alimentation électrique. Les tranches des électrodes 21, 22 et le chant de la couche électroactive sont de préférence en retrait par rapport aux chants des éléments (verres) 1,1' rectangulaires ou de toute autre forme. Les épaisseurs des des éléments (verres) 1,1' peuvent être par exemple de 0,7mm à 4mm. Ils peuvent être d'épaisseur de préférence supérieure à 100$\mu$m et d'au plus 300$\mu$m pour une meilleure tenue mécanique de l'ensemble et/ou une facilité de mise en œuvre, de manipulation mais si on veut plus de flexibilité, on peut descendre par exemple jusqu'à 50$\mu$m.

Le procédé de fabrication est décrit plus précisément ci-après.

La première couche d'ancrage 4' est donc une couche induisant un ancrage planaire unidirectionnel suivant une direction r1 des cristaux liquides en surface (hors champ) au contact de cette couche 4.

La première couche d'ancrage couche 4' est déposée sur les bandes d'ITO 21 et 22 et entre les bandes 23 sur le premier élément 1' par 'spin coating' d'une solution de polyalcool vinylique (PVA; Sigma-Aldrich; poids moléculaire 27 kDa) de 500 nm environ. La première couche d'ancrage couche 4' est alors brossée suivant la direction r1 parallèle aux bandes s'étendant suivant une direction r0 // à r1)

La deuxième couche d'ancrage 4 est donc une couche induisant un ancrage planaire unidirectionnel suivant une direction r2 des deuxième cristaux liquides en surface (hors champ) au contact de cette couche 4.

La deuxième d'ancrage 4 est déposée sur le deuxième élément 1 par 'spin coating' d'une solution de polyalcool vinylique (PVA; Sigma-Aldrich; poids moléculaire 27 kDa) de 300 nm environ. La deuxième couche d'ancrage 4 est alors brossée suivant la direction r2 perpendiculaire à r1.

La couche électroactive de cristaux liquides 3 est composée des cristaux liquides nématiques E7 (98% en poids) avec un colorant dichroïque noir dénommé S428 vendu par la société Mitsui Chemicals (2% en poids). L'épaisseur de la couche électroactive est de 10$\mu$m.

Comme montré en figure 2, par exemple les bandes isolantes 23 forment un arrangement en serpentin et on isole une première zone de couche électroconductrice avec une deuxième zone de la couche par une première portion 23a de la première bande isolante du serpentin et par une dernière portion 23b de la dernière bande isolante du serpentin.

Les bandes électroconductrices 21 et 22 sont parallèles à ro et r1.

On peut prévoir de réaliser cet arrangement de bandes isolantes par retrait d'une couche pleine électroconductrice notamment par faisceau laser femtoseconde par exemple de diamètre 30$\mu$m et les bandes étant de 15$\mu$m. La limite en épaisseur de bande est donnée par la taille du faisceau laser. La limite de la distance inter-bande est dictée par le déplacement du faisceau laser.

Les cristaux liquides présentent une anisotropie diélectrique positive ici.

La figure 3 représente une vue en coupe schématique d'un système optique 1000' composé d'un polariseur variable électrocommandable par cristaux liquides et colorant dichroïque 100 associé à un polariseur statique 10' (film plastique étiré à colorant dichroïque) dans un deuxième mode de réalisation de l'invention qui diffère du premier mode en ce que le polariseur statique 10' est tourné de 90° donc il coupe la polarisation suivant P2.

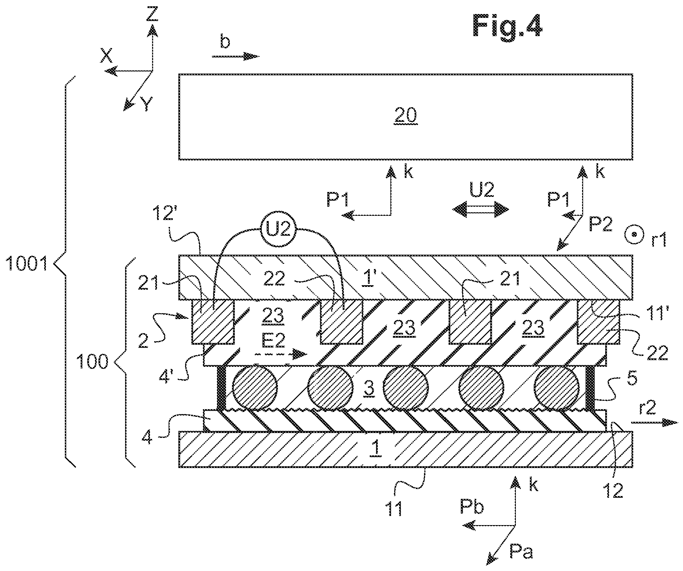

La figure 4 représente une vue en coupe schématique d'un système optique 1001 composé d'un polariseur variable électrocommandable par cristaux liquides et colorant dichroïque 100 associé à un dispositif électrocommandable sensible à la polarisation 20 dans un troisième mode de réalisation de l'invention.

Le dispositif 100 est analogue à celui décrit en figure 1.

Le dispositif 20 peut avoir un empilement de couches similaires au dispositif 10 avec les modifications suivantes :

- une couche d'ancrage directionnelle suivant b
- une couche d'ancrage planaire
- électrodes de type plan plan (de part et d'autre de la couche électroactive) donc champ électrique normal (suivant Z)
- cristaux liquides nématiques à domaines coniques focaux notamment EFHCD
- couche électroactive éventuellement colorée, de type PSCL (avec polymère réticulé).

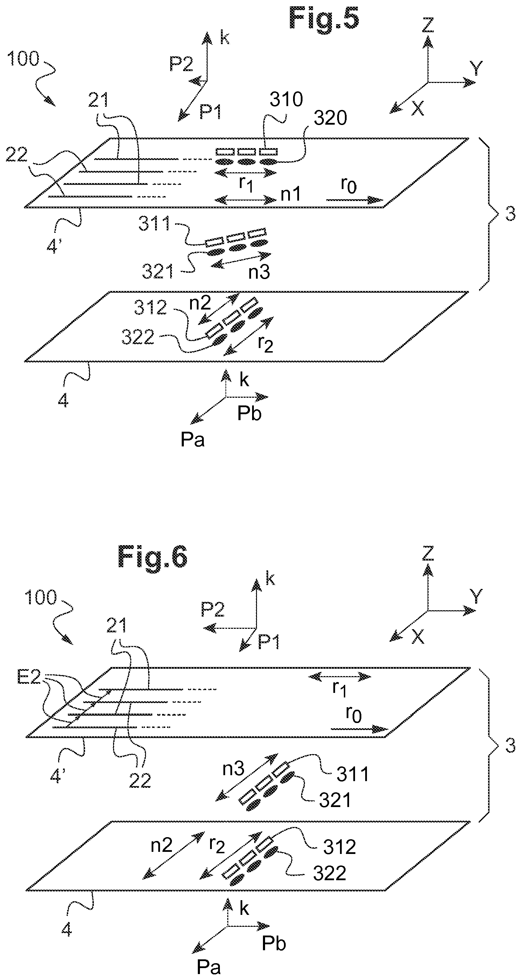

La figure 5 est une vue partielle schématique de principe en perspective du polariseur variable de la figure 1 dans un premier état fonctionnel qui est l'état off.

En surface de la couche d'ancrage 4, les cristaux liquides 312 (définis par le directeur n2) et colorants dichroïques 322 sont (globalement) parallèles à r2.

En surface de la couche d'ancrage 4' antagoniste, les cristaux liquides 310 (définis par le directeur n1) et colorants dichroïques 320 sont (globalement) parallèles à r1.

Cet antagonisme force les cristaux liquides nématiques à subir une déformation de torsion et les colorants dichroïques sont asservis aux nématiques.

Dans l'épaisseur de la couche électroactive 3 les cristaux liquides 311 (définis par le directeur n3) et colorants dichroïques 321 forment un angle (globalement) avec r1 et r2. La figure 6 est une vue partielle schématique de principe en perspective du polariseur variable de la figure 1 dans un deuxième état qui est un état on à une tension donnée U2.

En surface de la couche d'ancrage 4, les cristaux liquides 312 (définis par le directeur n2) et colorants dichroïques 322 demeurent (globalement) parallèles à r2.

Dans l'épaisseur de la couche électroactive 3 les cristaux liquides 311 (définis par le directeur n3) et colorants dichroïques 321 tendent globalement à s'aligner suivant r2. En sortie, la polarisation P1 perpendiculaire à r1 diminue et peut être quasi éteinte.

On a défini un premier ratio de polarisation pour la polarisation P1 (normale à r1) comme :

$$r1\,(U2) = \frac{T1}{T1+T2}$$

On a défini un deuxième ratio de polarisation pour la polarisation P2 (parallèle à r1 et normale à P1) comme :

$$r2\,(U2) = \frac{T2}{T1+T2}$$

T1 étant la transmission totale moyennée entre 380 et 640nm suivant l'axe de P1 et T2 étant la transmission totale suivant l'axe de P2 moyennée entre 380 et 640nm. On a utilisé un spectromètre type PerkinElmer® Lambda 900.

L'évolution des ratios r1 et r2 en fonction de la tension U2 appliquée est indiquée dans la table 1.

[Table 1]

| U2 (V) | $r_1$ (%) | $r_2$ (%) |
|--------|-----------|-----------|
| 0 | 99 | 1 |
| 20 | 49 | 51 |
| 40 | 32 | 68 |
| 60 | 26 | 74 |
| 80 | 22 | 78 |

A tension nulle, la polarisation suivant P1 est quasi parfaite.

Au fur et à mesure que la tension augmente la composante P2 augmente.

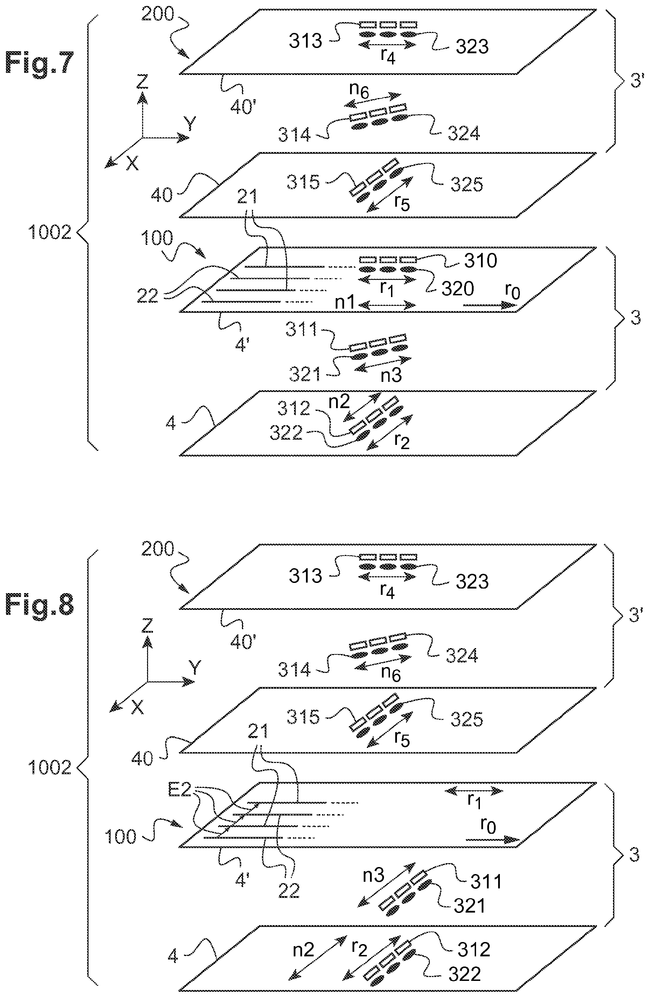

La figure 7 est une vue partielle schématique de principe en perspective d'un système 1002 comportant le polariseur variable et d'un polariseur statique alternatif 3' de structure similaire au polariseur variable mais sans électrodes dans un premier état fonctionnel du polariseur variable qui est l'état off (comme décrit en figure 5).

Le polariseur statique alternatif 3' comporte les mêmes couches d'ancrages unidirectionnelles 40, 40' suivant r4 et r5 reproduisant r1 et r2, des cristaux liquides nématiques torsadés entre la surface 40 (nématiques 315 et colorant 325) le coeur de la couche de cristaux liquides passive 3' (nématiques 314 et colorant 324) et la surface 40' (nématiques 313 et colorant 323).

La figure 8 est une vue partielle schématique de principe en perspective du polariseur variable et du polariseur statique alternatif de la figure 7 dans un deuxième état fonctionnel du polariseur variable qui est l'état on (comme décrit en figure 6).

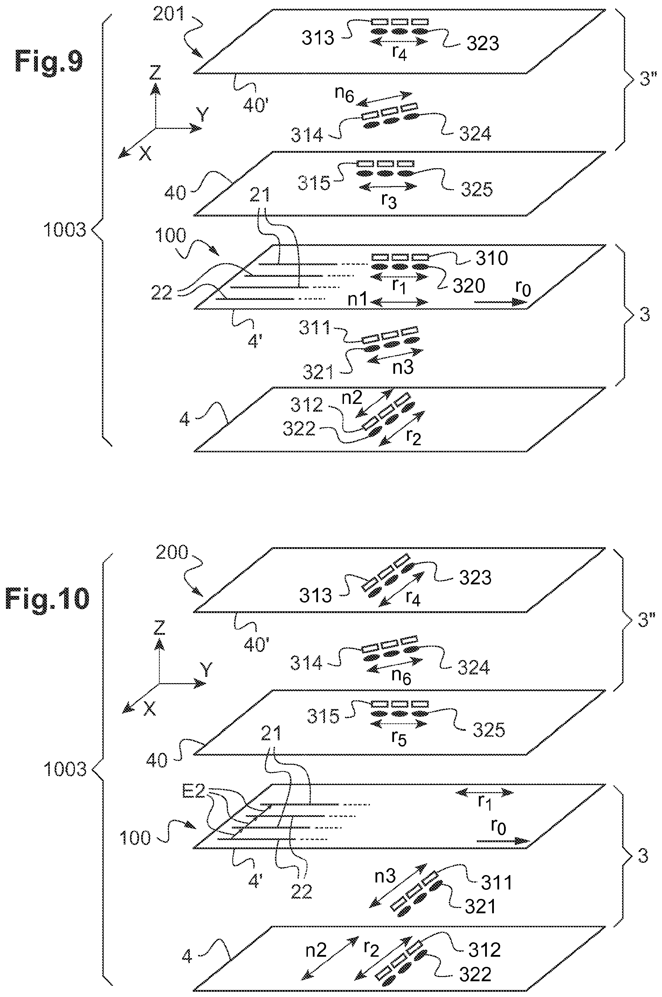

La figure 9 est une vue partielle schématique de principe en perspective d'un système 1002 comportant comportant le polariseur variable de la figure 1 et d'un polariseur statique alternatif 3' de structure similaire au polariseur variable mais sans électrodes dans un premier état fonctionnel du polariseur variable qui est l'état off, ceci dans une variante de la figure 7 le polariseur statique alternatif 3" ayant tourné de 90° par rapport au polariseur 3'.

La figure 10 est une vue partielle schématique de principe en perspective du polariseur variable et du polariseur statique alternatif 3" de la figure 9 dans un deuxième état fonctionnel qui est l'état on.

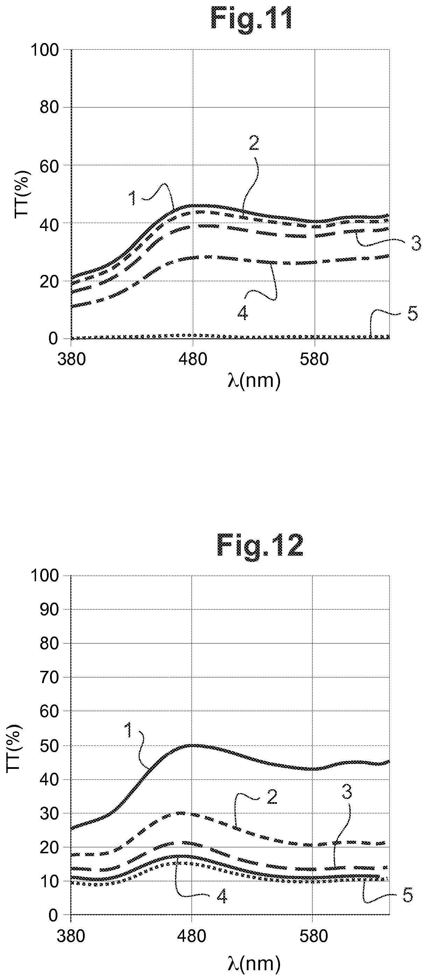

La figure 11 montre un ensemble de cinq courbes correspondant à la transmission totale TT en fonction de la longueur d'onde λ entre 380 et 630nm du polariseur variable illuminé avec une lumière polarisée (parallèle à) suivant r2.

La courbe 1 est le mode on (avec une tension U2 à 80V).

La courbe 2 est le mode on (avec une tension U2 à 60V).

La courbe 3 est le mode on (avec une tension U2 à 40V).

La courbe 4 est le mode on (avec une tension U2 à 20V).

La courbe 5 est le mode off (avec une tension U2 à 0V).

La transmission totale TT est quasi nulle à l'état off du polariseur variable. La transmission totale TT augmente avec la tension appliquée.

La figure 12 montre un ensemble de cinq courbes correspondant à la transmission totale TT en fonction de la longueur d'onde λ entre 380 et 630nm du polariseur variable illuminé avec une lumière polarisée normal à r2.

La courbe 1 est le mode off (avec une tension U2 à 0V).

La courbe 2 est le mode on (avec une tension U2 à 20V).

La courbe 3 est le mode on (avec une tension U2 à 40V).

La courbe 4 est le mode on (avec une tension U2 à 60V).

La courbe 5 est le mode on (avec une tension U2 à 80V).

La transmission totale TT augmente avec la tension appliquée.

EXEMPLES D'ASSEMBLAGE

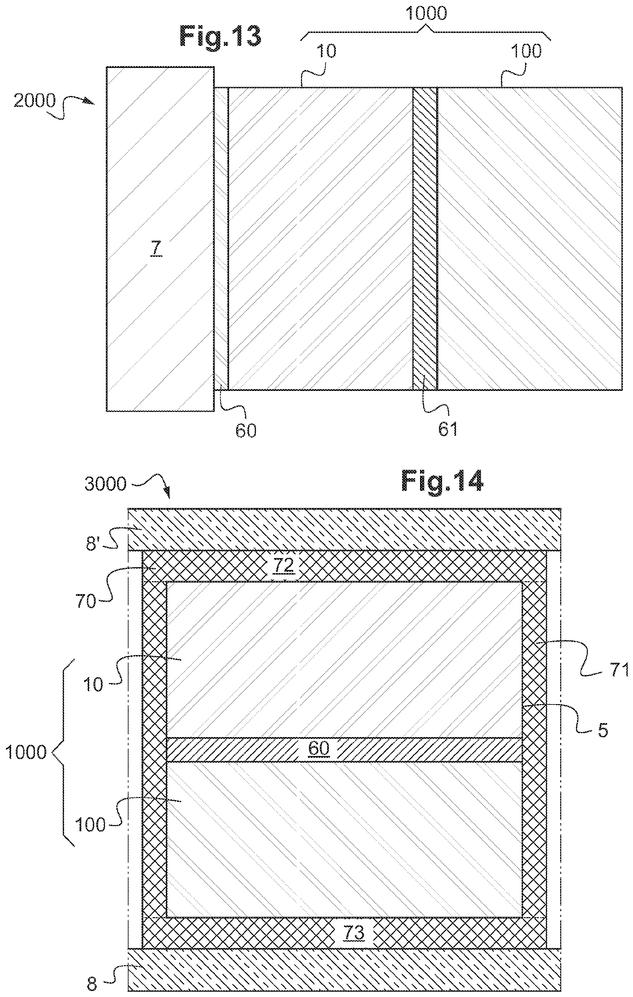

La figure 13 représente une vue en coupe schématique d'un ensemble vitré 2000 comportant une feuille transparente 7 (toute épaisseur possible) porteuse d'un système optique 1000 selon l'invention.

Un polariseur statique 10 est collé par une colle optique 60 à la feuille transparente 7 de verre ou plastique (rigide par exemple) et également est collé par une colle optique 61 au polariseur variable 100.

Par exemple il s'agit d'une cloison (position verticale).

L'ensemble peut faire partie d'un vitrage multiple (double ou triple vitrage). Pour un double vitrage, le système 1000 peut être coté face F1 (face extérieure par convention), F2, F3; F4 (face intérieure par convention). Pour un triple vitrage, l'empilement peut être coté face F1 (face extérieure), F2 , F3; F4 , F5 , F6 (face extérieure). La feuille 7 peut être de même dimension ou de plus grande taille que le système 1000.

L'ensemble vitré 2000 peut être :

- sur la face de préférence externe d'une paroi de douche ou l'élément 7 est une paroi de douche
- ou sur la face de préférence interne (face 'F4') d'un vitrage bombé de véhicule notamment automobile: toit, vitrage latéral, pare-brise, lunette ou l'élément 7 est le vitrage bombé

En particulier l'ensemble vitré 2000 peut servir d'écran de projection.

La figure 14 représente une vue en coupe schématique d'un vitrage feuilleté 3000 porteur un système optique 1000 selon l'invention comportant un polariseur statique 10 lié avec le polariseur variable 100 par une colle optique 60.

Le vitrage feuilleté 3000 comporte :

- une première feuille additionnelle de verre 8, transparente
- un intercalaire de feuilletage thermoplastique 70 notamment EVA ou PVB
- une deuxième feuille additionnelle de verre 8' ou de plastique transparente les aces principales internes dites F2 et F3 des première et deuxième feuilles additionnelles étant en regard, le système optique 1000 étant entre les faces F2 et F3 et au sein de l'intercalaire de feuilletage submillimétrique ou d'au plus 2mm

Lors de la fabrication on peut utiliser trois feuillets d'intercalaire : deux feuillets pleins 72, 73 contre les faces internes des feuilles 8, 8' et un feuillet central 71 avec une ouverture pour loger le système 1000. Après feuilletage l'interface entre feuillets (symbolisé en pointillés) n'est pas forcément discernable. On préfère que l'ouverture soit fermée plutôt que totalement débouchante sur un côté. Ainsi tout le chant du système 1000 est entouré d'intercalaire de feuilletage 70. Naturellement pour l'alimentation électrique, de la connectique peut sortir du système 1000 et même dépasser sur un ou plusieurs côtés des chants des vitrages.

Alternativement, on peut utiliser que deux feuillets d'intercalaires le feuillet central évidé n'étant pas nécessaire si le système 1000 est suffisamment mince par exemple d'épaisseur d'au plus 0,2mm.

L'une des feuilles 8 ou 8' peut être incolore ou teinté (gris, vert, bronze etc) et l'autre des vitrages clair ou extraclair 8' ou 8. Un des premiers feuillets intercalaires peut être teinté (gris, vert, bronze etc) et le ou les autres clair ou extraclair. L'une des feuilles 8 ou 8' peut être remplacée par une feuille plastique comme un polycarbonate ou un PMMA (notamment avec un intercalaire de feuilletage en PU).

Le chant de l'intercalaire de feuilletage 70 peut être en retrait (d'au plus 5mm par exemple) du chant des feuilles 8,8'.

Le système 1000 couvre par exemple la quasi-totalité des faces principales des feuilles 8 et même ici est centré. Il y a la même largeur de PVB de part et d'autre du système 1000 .

Les vitrages 8, 8' sont plans ou bombés, le système 1000 pouvant s'adapter à la ou aux courbures des feuilles de verre alors bombées 8,8'.

Le système optique 1000 peut être une cloison ou encore un toit de véhicule. Par exemple pour un toit automobile :

- la feuille 8 est la plus extérieure et bombé, qui est éventuellement teinté, par exemple de 3mm
- la feuille 8' est la plus intérieure , bombée, de préférence clair ou extraclair, par exemple de 3mm ou plus mince
- l'intercalaire de feuilletage 70 est en PVB qui peut être acoustique notamment bicouche ou tricouche (feuillet 71 ou 72 ou 73).

Le toit peut donc être aussi de couleur variable par exemple de bleu foncé à bleu clair avec la tension U1 ou U2.

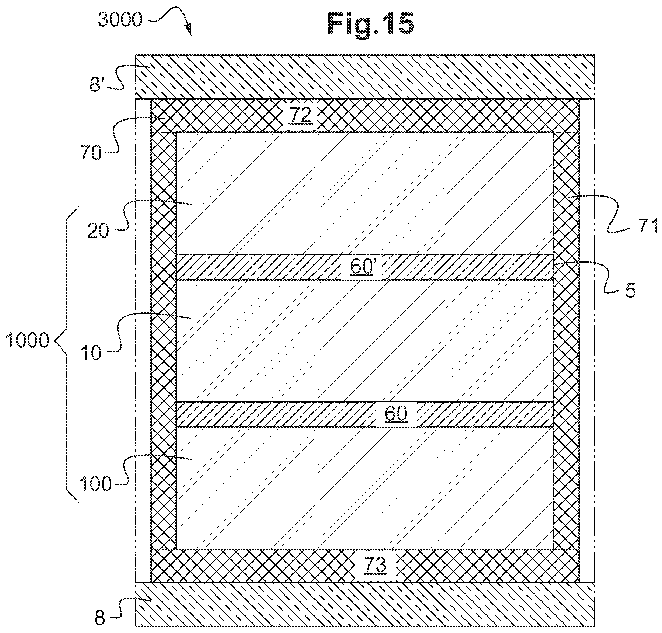

La figure 15 représente une vue en coupe schématique d'un vitrage feuilleté porteur d'un système optique 3000 selon l'invention dans une variante de la figure 14 en rajoutant un dispositif électrocommandable sensible à la polarisation 20 en plus de polariseur variable 100 et du polariseur statique 10 et dispositif électrocommandable collé au polariseur statique 10 par colle optique 60'.

En variante on supprime le polariseur statique 10..

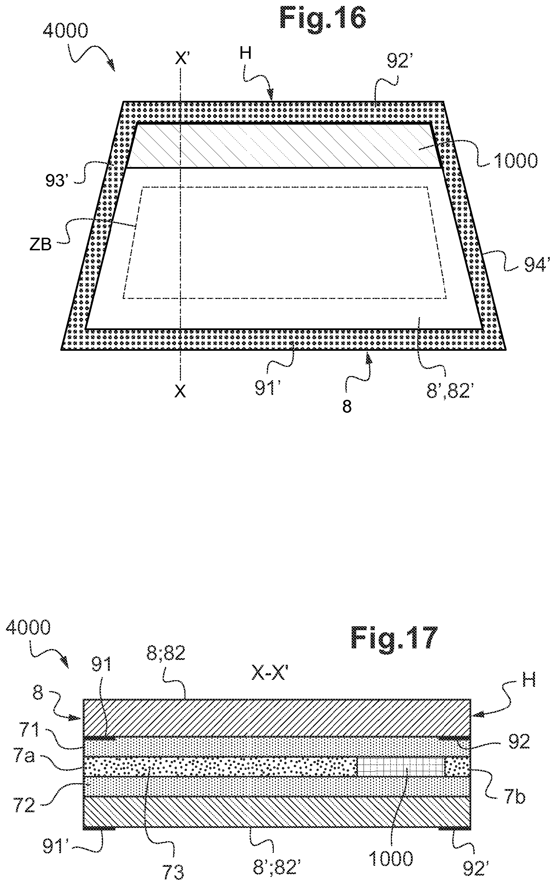

Les figures 16 et 17 représentent respectivement une vue de face et en coupe schématique d'un vitrage feuilleté porteur d'un système optique 4000 selon l'invention. Le vitrage feuilleté 4000 diffère de celui de la figure 14 en ce que le système optique 1000 couvre une portion de surface de la feuille 8, en particulier une bande périphérique par exemple le long d'un bord longitudinal H supérieur sur quasi toute la longueur du vitrage feuilleté.

Il s'agit par exemple un pare-brise de véhicule automobile.

Ce système optique 1000 en bande est dans une zone marginale dans laquelle les critères de TL et d'absence de flou sont plus libres que dans la zone centrale ZB.

Ce système optique 1000 en bande 1000 peut donc être aussi de couleur variable par exemple de bleu foncé à bleu clair avec la tension.

Comme montré en figure 17 (vue de coupe), la largeur 7a d'intercalaire central 73 entre le système optique 1000 et le bord longitudinal inférieur B est plus grande que la largeur 7b d'intercalaire central 73 entre le système optique 1000 et le bord longitudinal supérieur H.

En variante ou cumulativement, elle peut être présente le long d'un bord longitudinal B inférieur du pare-brise, sur toute la longueur ou une portion de longueur.

Comme montré en figure 16 (vue de face côté intérieur du véhicule), le pare-brise comprend un premier cadre opaque par exemple en émail (noir ou autre) 91' à 94' sur les bords latéraux et longitudinaux de la face libre (F4) 82' de la feuille interne 8' et un deuxième cadre opaque par exemple en émail (noir ou autre) 91 à 94 sur les bords latéraux et longitudinaux de la face libre (F1) 82 de la feuille externe 8.

La tranche du système optique 1000 qui est côté bord longitudinal inférieur, et même celles côté bords latéraux peut être (en face de) entre les couches 92, 92', 93, 93', 94, 94' des cadres émail. Par exemple les connectiques et autres bandes d'amenée de courant (pour U1 et U2) peuvent être également masquées par ces couches 92, 92', 93, 93', 94, 94'.

En variante, il s'agit d'un toit automobile par exemple avec le verre externe 8 qui est teinté et/ou le PVB 71 qui est teinté et le système optique 1000 qui couvre sensiblement toute la face principale des verres 8,8'.

## Revendications

1. Système optique à cristaux liquides (1000, 1000', 1001, 1002, 1003) comportant un dispositif électrocommutable à polarisation variable, dit polariseur variable (100, 100',101, 102), le polariseur variable comportant :

   - des première et deuxième électrodes transparentes (21,22) avec un champ électrique E2 entre les première et deuxième électrodes, les première et deuxième électrodes sont coplanaires, formant une alternance de premières et deuxièmes bandes électroconductrices (21, 22) à des potentiels distincts allongées suivant une direction r0
   - une couche électroactive (3) en une matière comportant des cristaux liquides qui sont nématiques et des colorants dichroïques et en ce que
   le polariseur variable comporte :
   - une couche d'ancrage planaire unidirectionnelle selon une direction r1 (4') sur une face principale de la couche électroactive et sur les première et deuxième électrodes,
   - et une autre couche d'ancrage planaire unidirectionnelle selon une direction r2 sur une autre face principale de la couche électroactive (3) et **caractérisé en ce que** la direction r2 est distincte de la direction r1, r1 forme un angle de 90°±15° avec r2, et
   - r0 forme un angle d'au plus 15° avec r1 et les cristaux liquides ont une anisotropie diélectrique positive
   - ou r0 forme un angle de 90°±15° avec r1 et les cristaux liquides ont une anisotropie diélectrique négative.

2. Système optique à cristaux liquides (1000, 1000', 1001, 1002, 1003,) selon la revendication précédente **caractérisé en ce que** les cristaux liquides sont nématiques torsadés à l'état off du polariseur variable.

3. Système optique à cristaux liquides (1000, 1000', 1001, 1002, 1003) selon l'une des revendications précédentes **caractérisé en ce que** le polariseur variable est dénué de films polariseurs statiques.

4. Système optique à cristaux liquides (1000, 1000', 1001, 1002, 1003,) selon l'une des revendications précédentes **caractérisé en ce que** le champ électrique E2 est alternatif.

5. Système optique à cristaux liquides (1000, 1000', 1001, 1002, 1003,) selon l'une des revendications précédentes **caractérisé en ce que** le polariseur variable présente des premier et deuxième états fonctionnels et

   - dans le premier état fonctionnel qui est l'état off, à partir d'une lumière incidente non polarisée, le polariseur variable est apte à délivrer une lumière de sortie avec une première composante du champ électrique P1 suivant un premier axe et une deuxième composante du champ électrique P2 suivant un deuxième axe normal au premier axe, avec un premier ratio de polarisation défini par :

[Math 5]

$$rp1 = \frac{T1}{T1+T2}$$

rp1 étant d'au moins 70%, ou même d'au moins 90%, T1 étant la transmission totale à une longueur d'onde entre 380 et 800nm suivant le premier axe et T2 étant la transmission totale suivant le deuxième axe à la longueur d'onde entre 380 et 800nm

- et dans le deuxième état fonctionnel qui est un état on:

à partir d'une lumière incidente non polarisée, le polariseur variable étant apte à délivrer une lumière de sortie avec un deuxième ratio de polarisation défini par :

[Math 6]

$$rp2 = \frac{T'2}{T'1 + T'2}$$

rp2 étant d'au moins 30%, et même d'au moins 50%

T'1 étant la transmission totale à une longueur d'onde entre 380 et 800nm suivant le premier axe et T'2 étant la transmission totale suivant le deuxième axe à la longueur d'onde entre 380 et 800nm pour une tension non nulle entre les première et deuxième électrodes.

6. Système optique à cristaux liquides selon l'une des revendications précédentes **caractérisé en ce que** P1 est normal à r1 et P2 parallèle à r1

7. Système à cristaux liquides selon l'une des revendications précédentes **caractérisé en ce que** r1 forme un angle de 90°±5° avec r2 :

   - r0 forme un angle d'au plus 5° avec r1 et les cristaux liquides ont une anisotropie diélectrique positive
   - ou r0 forme un angle de 90°±5° avec r1 et les cristaux liquides ont une anisotropie diélectrique négative.

8. Système optique à cristaux liquides selon l'une des revendications précédentes **caractérisé en ce qu'**il comporte un polariseur statique faisant face audit polarisateur variable.

9. Système optique à cristaux liquides (2000, 3000, 4000) selon l'une des revendications précédentes **caractérisé en ce que** le polariseur variable et un polariseur statique ou un dispositif électrocommandable sensible à la polarisation sont disjoints ou liés par une couche de liaison transparente notamment une colle optique ou une couche thermoplastique notamment d'intercalaire de feuilletage ou **en ce que** le polariseur variable comporte un élément porteur des première et deuxième électrodes qui forme ledit polariseur statique.

10. Système optique à cristaux liquides selon l'une des revendications précédentes **caractérisé en ce qu'**il comporte face à face avec le polariseur variable, un dispositif électrocommandable sensible à la polarisation, en particulier le dispositif électrocommandable sensible à la polarisation est à dispositif électrocommandable diffusion variable par cristaux liquides nématiques comportant de préférence des domaines coniques focaux.

11. Système optique à cristaux liquides selon la revendication précédente **caractérisé en ce que** les domaines sont des domaines coniques focaux, en particulier avec deux défauts lignes notamment l'un elliptique et l'autre hyperbolique, de préférence les domaines coniques focaux forment un réseau linéaire parallèle à une direction b, notamment d'ancrage des cristaux liquides en surface.

12. Système optique à cristaux liquides selon la revendication précédente **caractérisé en ce que** ledit dispositif électrocommandable à diffusion variable par cristaux liquides comportant une couche électroactive aves les cristaux liquides et avec la direction b formant un angle de 0°±15° ou de 90°±15 avec la polarisation P1 de la lumière de sortie à l'état off du polariseur variable.

13. Vitrage feuilleté (3000, 4000) comprenant :

   - un système optique selon l'une des revendications précédentes
   - une première feuille additionnelle de verre (8), transparente
   - un intercalaire de feuilletage thermoplastique notamment EVA ou PVB
   - une deuxième feuille additionnelle de verre (8') ou de plastique transparente

les faces principales internes dites F2 et F3 des première et deuxième feuilles additionnelles étant en regard, le système optique selon l'une des revendications précédentes étant de préférence entre les faces F2 et F3 et de préférence dans l'intercalaire de feuilletage.

14. Vitrage de véhicule (3000, 4000) porteur du système optique selon l'une des revendications 1 à 12.

15. Vitrage de bâtiment (2000) porteur du système optique selon l'une des revendications 1 à 12.


**Patentansprüche**

1. Optisches Flüssigkristallsystem (1000, 1000', 1001, 1002, 1003), das eine elektrisch schaltbare Vorrichtung mit variabler Polarisation, den sogenannten variablen Polarisator (100, 100', 101, 102), vorweist, wobei der variable Polarisator vorweist:

    - eine erste und eine zweite transparente Elektrode (21, 22) mit einem elektrischen Feld E2 zwischen der ersten und der zweiten Elektrode, wobei die erste und die zweite Elektrode koplanar sind und einen Wechsel von ersten und zweiten elektrisch leitfähigen Bändern (21, 22) mit unterschiedlichen Potentialen, die einer Richtung r0 folgend verlängert sind, ausbilden
    - eine elektroaktive Schicht (3) aus einem Material, das Flüssigkristalle, die nematisch sind, und dichroitische Farbstoffe vorweist, und wobei der variable Polarisator vorweist:
    - eine unidirektionale planare Verankerungsschicht entlang einer Richtung r1 (4') auf einer Hauptfläche der elektroaktiven Schicht und auf der ersten und der zweiten Elektrode,
    - und eine weitere unidirektionale planare Verankerungsschicht entlang einer Richtung r2 auf einer anderen Hauptfläche der elektroaktiven Schicht (3) und **dadurch gekennzeichnet, dass** sich die Richtung r2 von der Richtung r1 unterscheidet,
    - r1 einen Winkel von 90°±15° mit r2 ausbildet und
    - r0 einen Winkel von höchstens 15° mit r1 ausbildet und die Flüssigkristalle eine positive dielektrische Anisotropie besitzen
    - oder r0 einen Winkel von 90°±15° mit r1 ausbildet und die Flüssigkristalle eine negative dielektrische Anisotropie besitzen.

2. Optisches Flüssigkristallsystem (1000, 1000', 1001, 1002, 1003) nach dem vorstehenden Anspruch, **dadurch gekennzeichnet, dass** die Flüssigkristalle in dem ausgeschalteten Zustand des variablen Polarisators verdrillt-nematisch sind.

3. Optisches Flüssigkristallsystem (1000, 1000', 1001, 1002, 1003, 1000a) nach dem vorstehenden Ansprüche, **dadurch gekennzeichnet, dass** der variable Polarisator frei von statischen Polarisatorfolien ist.

4. Optisches Flüssigkristallsystem (1000, 1000', 1001, 1002, 1003) nach einem der vorstehenden Ansprüche, **dadurch gekennzeichnet, dass** das elektrische Feld E2 ein Wechselfeld ist.

5. Optisches Flüssigkristallsystem (1000, 1000', 1001, 1002, 1003) nach einem der vorstehenden Ansprüche, **dadurch gekennzeichnet, dass** der variable Polarisator einen ersten und einen zweiten Funktionszustand aufweist und

    - in dem ersten Funktionszustand, der der ausgeschaltete Zustand ist, anhand eines nicht polarisierten einfallenden Lichts, der variable Polarisator geeignet ist, ein Ausgangslicht mit einer ersten Komponente des elektrischen Felds P1, einer ersten Achse folgend, und eine zweite Komponente des elektrischen Felds P2, einer zweiten Achse senkrecht zu der ersten Achse folgend, abzugeben, wobei ein erstes Polarisationsverhältnis definiert ist durch:

[Math. 5]

$$rp1 = \frac{T1}{T1+T2}$$

wobei rp1 mindestens 70 % oder sogar mindestens 90 % beträgt, T1 die Gesamttransmission bei einer Wellenlänge zwischen 380 und 800 nm, der ersten Achse folgend, ist und T2 die Gesamttransmission, der zweiten Achse folgend, bei der Wellenlänge zwischen 380 und 800 nm ist
- und in dem zweiten Funktionszustand, der ein eingeschalteter Zustand ist:
anhand eines nicht polarisierten einfallenden Lichts, der variable Polarisator geeignet ist, ein Ausgangslicht mit einem zweiten Polarisationsverhältnis abzugeben, das definiert ist durch:

[Math. 6]

$$rp2 = \frac{T'2}{T'1+T'2}$$

wobei rp2 mindestens 30 %, sogar mindestens 50 % beträgt
wobei T'1 die Gesamttransmission bei einer Wellenlänge zwischen 380 und 800 nm, der ersten Achse folgend, ist und T'2 die Gesamttransmission, der zweiten Achse folgend, bei der Wellenlänge zwischen 380 und 800 nm für eine Spannung von nicht null zwischen der ersten und der zweiten Elektrode ist.

6. Optisches Flüssigkristallsystem nach einem der vorstehenden Ansprüche, **dadurch gekennzeichnet, dass** P1 senkrecht zu r1 und P2 parallel zu r1 ist

7. Optisches Flüssigkristallsystem nach einem der vorstehenden Ansprüche, **dadurch gekennzeichnet, dass** r1 einen Winkel von 90°±5° mit r2 ausbildet:

   - r0 einen Winkel von höchstens 5° mit r1 ausbildet und die Flüssigkristalle eine positive dielektrische Anisotropie besitzen
   - oder r0 einen Winkel von 90°±5° mit r1 ausbildet und die Flüssigkristalle eine negative dielektrische Anisotropie besitzen.

8. Optisches Flüssigkristallsystem nach einem der vorstehenden Ansprüche, **dadurch gekennzeichnet, dass** es einen statischen Polarisator, der dem variablen Polarisator gegenüberliegt, vorweist.

9. Optisches Flüssigkristallsystem (2000, 3000, 4000) nach einem der vorstehenden Ansprüche, **dadurch gekennzeichnet, dass** der variable Polarisator und ein statischer Polarisator oder eine elektrisch steuerbare polarisationsempfindliche Vorrichtung durch eine transparente Verbindungsschicht, insbesondere einen optischen Klebstoff oder eine thermoplastische Schicht, insbesondere eine Verbundzwischenlage, getrennt oder verbunden sind oder **dadurch, dass** der variable Polarisator ein Trägerelement aus der ersten und zweiten Elektrode, das den statischen Polarisator ausbildet, vorweist.

10. Optisches Flüssigkristallsystem nach einem der vorstehenden Ansprüche, **dadurch gekennzeichnet, dass** es gegenüber dem variablen Polarisator eine elektrisch steuerbare polarisationsempfindliche Vorrichtung vorweist, wobei im Besonderen die elektrisch steuerbare polarisationsempfindliche Vorrichtung an einer elektrisch steuerbaren Vorrichtung mit variabler Diffusion durch nematische Flüssigkristalle, die vorzugsweise fokale konische Bereiche vorweisen, ist.

11. Optisches Flüssigkristallsystem nach einem der vorstehenden Ansprüche, **dadurch gekennzeichnet, dass** die Bereiche fokale konische Bereiche sind, im Besonderen mit zwei Liniendefekten, insbesondere wobei der eine elliptisch und der andere hyperbolisch ist, wobei vorzugsweise die fokalen konischen Bereiche ein lineares Netz ausbilden, das parallel zu einer Richtung b ist, insbesondere zur Verankerung von Flüssigkristallen in der Oberfläche.

12. Optisches Flüssigkristallsystem nach dem vorstehenden Anspruch, **dadurch gekennzeichnet, dass** die elektrisch steuerbare Vorrichtung mit variabler Diffusion durch Flüssigkristalle eine elektroaktive Schicht mit den Flüssigkristallen vorweist und wobei die Richtung b einen Winkel von 0°±15° oder von 90°±15° mit der Polarisation P1 des Ausgangslichts in dem ausgeschalteten Zustand des variablen Polarisators ausbildet.

13. Verbundverglasung (3000, 4000) umfassend:

    - ein optisches System nach einem der vorstehenden Ansprüche
    - eine erste zusätzliche transparente Folie aus Glas (8);
    - eine thermoplastische Verbundzwischenlage, insbesondere EVA oder PVB

- eine zweite zusätzliche transparente Folie aus Glas (8') oder Kunststoff;
wobei die inneren Hauptflächen, genannt F2 und F3 der ersten und der zweiten zusätzlichen Folie einander gegenüber liegen, wobei das optische System nach einem der vorstehenden Ansprüche vorzugsweise zwischen den Flächen F2 und F3 und vorzugsweise in der Verbundzwischenlage ist.

14. Fahrzeugverglasung (3000, 4000), die Träger des optischen Systems nach einem der Ansprüche 1 bis 12 ist.

15. Gebäudeverglasung (2000), die Träger des optischen Systems nach einem der Ansprüche 1 bis 12 ist.

**Claims**

1. A liquid crystal optical system (1000, 1000', 1001, 1002, 1003) comprising a variable polarization electro-switchable device, referred to as a variable polarizer (100, 100', 101, 102), the variable polarizer comprising:

    - first and second transparent electrodes (21, 22) with an electric field E2 between the first and second electrodes, the first and second electrodes are coplanar, forming an alternation of first and second electrically conductive strips (21, 22) at distinct potentials elongate in a direction r0
    - an electroactive layer (3) made of a material comprising liquid crystals which are nematic and dichroic dyes.the variable polarizer comprises:
    - a unidirectional planar anchoring layer in a direction r1 (4') on a main face of the electroactive layer and on the first and second electrodes,
    - and another unidirectional planar anchoring layer in a direction r2 on another main face of the electroactive layer (3),

    and **characterized in that**:

    direction r2 is separate from r1,
    r1 forms an angle of 90°±15° with r2:
    - r0 forms an angle of at most 15° with r1 and the liquid crystals have positive dielectric anisotropy
    - or r0 forms an angle of 90°±15° with r1 and the liquid crystals have negative dielectric anisotropy;

2. The liquid crystal optical system (1000, 1000', 1001, 1002, 1003) according to the preceding claim, **characterized in that** the liquid crystals are twisted nematic in the off state of the variable polarizer.

3. The liquid crystal optical system (1000, 1000', 1001, 1002, 1003) according to one of the preceding claims, **characterized in that** the variable polarizer is devoid of static polarizing films.

4. The liquid crystal optical system (1000, 1000', 1001, 1002, 1003) according to one of the preceding claims, **characterized in that** the electric field E2 is alternating.

5. The liquid crystal optical system (1000, 1000', 1001, 1002, 1003) according to one of the preceding claims, **characterized in that** the variable polarizer has first and second functional states and

    - in the first functional state which is the off state, from an unpolarized incident light, the variable polarizer is able to deliver an output light with a first component of the electric field P1 along a first axis and a second component of the electric field P2 along a second axis normal to the first axis, with a first polarization ratio defined by:

[Math 5]

$$rp1 = \frac{T1}{T1 + T2}$$

rp1 being at least 70%, or even at least 90%, t1 being the total transmission at a wavelength between 380 and 800 nm along the first axis and T2 being the total transmission along the second axis at the wavelength between 380 and 800 nm

- and in the second functional state which is an on state:
from the non-polarized incident light, the variable polarizer being able to deliver an output light with a second polarization ratio defined by:

[Math 4]

$$rp2 = \frac{T'2}{T'1 + T'2}$$

rp2 is at least 30%, and even at least 50%
T'1 being the total transmission at a wavelength between 380 and 800 nm along the first axis and T'2 being the total transmission along the second axis at the wavelength between 380 and 800 nm for a non-zero voltage between the first and second electrodes.

6. The liquid crystal optical system according to one of the preceding claims, **characterized in that** P1 is normal to r1 and P2 parallel to r1.

7. The liquid crystal system according any of to preceding claims, **characterized in that** r1 forms an angle of 90°±5° with r2:

   - r0 forms an angle of at most 5° with r1 and the liquid crystals have positive dielectric anisotropy
   - or r0 forms an angle of 90°±5° with r1 and the liquid crystals have negative dielectric anisotropy.

8. The liquid crystal optical system according to one of the preceding claims, **characterized in that** it comprises a static polarizer facing said variable polarizer.

9. The liquid crystal optical system (2000, 3000, 4000) according to one of the preceding claims, **characterized in that** the variable polarizer and a static polarizer or an electrically controlled polarization-sensitive device are disjoint or linked by a transparent bonding layer, in particular an optical glue or a thermoplastic layer, in particular a lamination interlayer, or **in that** the variable polarizer comprises an element bearing the first and second electrodes which forms said static polarizer.

10. The liquid crystal optical system according to one of the preceding claims, **characterized in that** it comprises, face to face with the variable polarizer, an electrically controllable polarization-sensitive device, in particular the electrically controllable polarization-sensitive device is a variable-scattering electrically controllable device using nematic liquid crystals preferably comprising focal conic domains.

11. The liquid crystal optical system according to the preceding claim, **characterized in that** the domains are focal conic domains, in particular with two defect lines, in particular one elliptical and the other hyperbolic, preferably the focal conic domains form a linear network parallel to a direction b, in particular for anchoring the liquid crystals on the surface.

12. The liquid crystal optical system according to the preceding claim, **characterized in that** said variable-scattering electrically controllable device using liquid crystals comprising an electroactive layer with the liquid crystals and with the direction b forming an angle of 0°±15° or of 90°±15 with the polarization P1 of the output light in the off state of the variable polarizer.

13. A laminated glazing (3000, 4000) comprising:

    - an optical system according to one of the preceding claims
    - a first additional glass sheet (8) that is transparent
    - a thermoplastic, in particular EVA or PVB, lamination interlayer
    - a second additional glass (8') or transparent plastic sheet the main internal faces, referred to as F2 and F3, of the first and second additional glass sheets facing one another, the optical system according to one of the preceding claims preferably being the faces F2 and F3 and preferably in the lamination interlayer.

**14.** A vehicle glazing (3000, 4000) bearing the optical system according to claims 1 to 12.

**15.** A glazing for a building (2000) bearing the optical system according to one of claims 1 to 12.

# Fig.1

**Fig.2**

**Fig.3**

Fig.4

# Fig.5

# Fig.6

Fig.7

Fig.8

Fig.9

Fig.10

## Fig.11

## Fig.12

**Fig.13**

1000

2000

10    100

7

60    61

**Fig.14**

3000

8'

72

70

10

71

1000

60

5

100

73

8

# Fig.15

## Fig.16

## Fig.17

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012140133 A1
- WO 2020065038 A
- EP 0844075 A
- WO 04025334 A
- WO 2010136702 A

**Littérature non-brevet citée dans la description**

- **LING LING MA**. Smectic Layer Origami Preprogrammed Photoalignement. *Advances Materials*, 2017, vol. 1606671, 1-7
- **MARK T SIMS**. dyes as guests in ordered systems : current understanding and future directions. *Liquid Crystals*, 2016, vol. 43 (13-15), 2363-2374
- Electrooptic effect in Liquid Crystal Materials. **L.M BLINOV**. Optical Anisotropy and Dichroïsm. Springer, 1994, 66, 68